(19) Europäisches Patentamt
European Patent Office
Office européen des brevets

(11) **EP 4 694 434 A1**

(12) **EUROPEAN PATENT APPLICATION**
published in accordance with Art. 153(4) EPC

(43) Date of publication:
**11.02.2026 Bulletin 2026/07**

(21) Application number: **23931595.5**

(22) Date of filing: **07.04.2023**

(51) International Patent Classification (IPC):
***H04W 72/02*** ***(2009.01)***

(52) Cooperative Patent Classification (CPC):
**H04W 72/02**

(86) International application number:
**PCT/CN2023/087155**

(87) International publication number:
**WO 2024/207536 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **FUJITSU LIMITED
Kawasaki-shi, Kanagawa 211-8588 (JP)**

(72) Inventors:
• **JIANG, Qinyan
  Beijing 100022 (CN)**
• **ZHANG, Lei
  Beijing 100022 (CN)**

(74) Representative: **Haseltine Lake Kempner LLP
Cheapside House
138 Cheapside
London EC2V 6BJ (GB)**

(54) **INFORMATION SENDING METHOD, INFORMATION RECEIVING METHOD, REPEATER AND NETWORK DEVICE**

(57) Embodiments of this disclosure provide an information transmitting method, an information receiving method, a repeater and a network device. The information receiving method includes: receiving, by the repeater, first configuration information and/or second configuration information and/or third configuration information related to a first DCI format used to control the repeater, and the transmitting unit further transmits downlink control information using the first DCI format, (a position of) a second slot where a first time domain resource is located indicated by the downlink control information being related to a first time position and/or a second time position and/or a third time position, and/or being related to a first parameter and/or a second parameter, and/or being related to a first subcarrier spacing and/or a second subcarrier spacing and/or a third subcarrier spacing.

201

the repeater (NCR or NCR-MT) receives, first configuration information and/or second configuration information and/or third configuration information related to a first DCI format used to control the repeater, the first configuration information being used to configure a time domain resource list, and/or the second configuration information being used to configure an RNTI for scrambling the first DCI format, and/or the third configuration information being used to configure a search space for monitoring the first DCI format

202

the repeater (NCR or NCR-MT) Receives downlink control information

**Fig. 2**

EP 4 694 434 A1

**Description**

Technical Field

This disclosure relates to the field of communication technologies.

Background

Compared with legacy 3G (third generation mobile communication technology) and 4G (fourth generation mobile communication technology) systems, a 5G (fifth generation mobile communication technology) system can provide larger bandwidths and higher data rates, and is able to support more types of terminals and vertical services.

For this reason, 5G systems are also deployed at new spectrum in addition to legacy telecommunications spectrum, and frequencies of the spectrum are obviously higher than those of legacy telecommunications spectrum used in 3G and 4G systems. For example, a 5G system may be deployed in a millimeter waveband (such as 28 GHz, 38GHz, 60 GHz, and higher wavebands).

According to the principle of propagation of wireless signals, the higher a carrier frequency, the more severe a fading experienced by signals during transmission. Therefore, in actual deployment, a 5G system needs a cell coverage enhancement method more than 3G and 4G systems need, especially a 5G system deployed in a millimeter waveband. Hence, how to better enhance cell coverage of a 5G system has become an urgent problem to be solved.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

In order to better solve the coverage problem of cellular mobile communication systems in practical deployment, use of a radio frequency (RF) relay/repeater to amplify and forward signals between a terminal equipment (UE) and a network device is commonly used means of deployment. RF repeaters are widely used in actual deployment of 3G and 4G systems. Generally speaking, an RF repeater is a device that amplifies and forwards signals between devices in the RF domain. That is, an RF repeater is a non-regenerative relay node, which only directly amplifies and forwards all received signals.

It was found by the inventors that for a coverage problem encountered in deploying a 5G system, performing coverage enhancement by using a legacy RF repeater is one of feasible solutions. However, as a forwarding behavior of an RF repeater is not controlled by a network, on the one hand, an effect of amplifying and forwarding a target signal by the repeater may possibly be not ideal, and on the other hand, it may pose significant interference to other devices in the network, and increase noise and interference levels of the system, thereby reducing network throughput. Specifically, taking an antenna direction as an example, compared to 2G, 3G and 4G systems, a 5G system adopts the more advanced and complex MIMO (multiple-input multiple-output) technology. In the 5G system, especially for higher carrier frequencies, directional antennas have become basic components of a network device and a terminal equipment. Transmitting and receiving signals based on a beamforming technology is a fundamental signal transmission mode in the 5G system. (Analog) beam directions and widths, etc., of the network device and terminal equipment may dynamically change (i.e. beam switching) due to such factors as changes of positions. However, antennas of a legacy RF repeater may not be dynamically adjusted with respect to directions and have relatively wide beams, and beam directions and beam widths of transmitting and receiving antennas of the RF repeater are unable to flexibly match positions of the network device and terminal equipment and dynamic changes of the beam directions and widths of the transmitting and receiving antennas. If such an RF repeater is configured in the 5G system, on the one hand, its performance/effect of amplifying/enhancing target signals is/are not significant due to that the beam directions and beam widths of its transmitting and receiving antennas do not match the beam directions and beam widths of the network device and terminal equipment, and on the other hand, it may also cause significant interference to other devices (e.g. a network device or a terminal equipment) within a larger range due to use of wider transmitting beams, and increase noise and interference levels of the entire system, thereby reducing network throughput.

A network controlled repeater (NCR) scheme is proposed in 3GPP Rel-18 to enhance NR coverage, so as to forward signals between a network device and a terminal equipment. NCR may directly communicate with the network device via control links to assist in forwarding operations of the NCR.

It was found by the inventors that how to control forwarding operations of the NCR via aperiodic indications especially how to indicate aperiodic forwarding resources has become urgent problem to be solved.

In order to solve at least one of the above problems or other similar problems, embodiments of this disclosure provide an information transmitting method, an information receiving method, a repeater and a network device

According to one aspect of the embodiments of this disclosure, there is provided a network device, including:

a transmitting unit configured to transmit first configuration information and/or second configuration information and/or third configuration information related to a first DCI format used to control the repeater to the repeater, the first configuration information being used to configure a time domain resource list, and/or the second configuration information being used to configure an RNTI for scrambling the first DCI format, and/or the third configuration information being used to configure a search space for monitoring the first DCI format; and
and transmit downlink control information using the first DCI format to the repeater, (a position of) a second slot where a first time domain resource is located indicated by the downlink control information being related to a first time position and/or a second time position and/or a third time position, and/or being related to a first parameter and/or a second parameter, and/or being related to a first subcarrier spacing and/or a second subcarrier spacing and/or a third subcarrier spacing.

According to another aspect of the embodiments of this disclosure, there is provided a repeater, including:

a receiving unit configured to receive first configuration information and/or second configuration information and/or third configuration information related to a first DCI format used to control the repeater, the first configuration information being used to configure a time domain resource list, and/or the second configuration information being used to configure an RNTI for scrambling the first DCI format, and/or the third configuration information being used to configure a search space for monitoring the first DCI format; and
the receiving unit is further configured to receive downlink control information using the first DCI format, (a position of) a second slot where a first time domain resource is located indicated by the downlink control information being related to a first time position and/or a second time position and/or a third time position, and/or being related to a first parameter and/or a second parameter, and/or being related to a first subcarrier spacing and/or a second subcarrier spacing and/or a third subcarrier spacing.

According to a further aspect of the embodiments of this disclosure, there is provided a communication system, including the repeater as described in the another aspect and/or the network device as described in the one aspect.

An advantage of the embodiments of this disclosure exists in that in determining the positions of time domain resources corresponding to the access link beams, subcarrier spacings and/or reference slot positions and/or offsets are taken into account. This enables corresponding time domain resources of the repeater in performing forwarding to match corresponding time domain resources of signals received or transmitted between the network device and the UE, thereby improving effects of amplifying/enhancing signals, saving power consumption of the repeater, reducing interference to other devices in the network, and improving throughput of the network.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/comprising/include/including" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiments of the disclosure may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:

FIG. 1 is schematic diagram of a communication system of embodiments of this disclosure;

FIG. 2 is a schematic diagram of an information receiving method of embodiments of this disclosure;

FIGs. 3A-3C are schematic diagrams of a first slot of the embodiments of this disclosure;

FIGs. 4A-4C are schematic diagrams of a fifth slot of the embodiments of this disclosure;

FIGs. 5A-5C are schematic diagrams of a third slot and a fourth slot of the embodiments of this disclosure;

FIGs. 6A-6C are schematic diagrams of a seventh slot of the embodiments of this disclosure;

FIGs. 7A-7B are schematic diagrams of how to determine other types of slots by a first parameter in a unit of a slot;

FIGs. 8A-8C are schematic diagrams of how to determine other types of slots by the first parameter in a unit of a symbol;

FIGs. 9A-9F are schematic diagrams of how to determine other types of slots (such as a second time position) by the first parameter in a unit of an absolute time;

FIGs. 10A-10C are schematic diagrams of how to determine a second slot or a seventh slot by a second parameter in a unit of a slot;

FIG. 11 is a schematic diagram of an information transmitting method of embodiments of this disclosure;

FIG. 12 is a schematic diagram of a repeater of embodiments of this disclosure;

FIG. 13 is a schematic diagram of a network device of embodiments of this disclosure; and

FIG. 14 is a schematic diagram of an electronic device of embodiments of this disclosure.

Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber station (SS), an access terminal (AT), an IAB-MT, or a station, etc.

The terminal equipment may include but not limited to the following devices: a cellular phone, a personal digital assistant (PDA), a wireless modem, a wireless communication device, a hand-held device, an machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, existing traffics or traffics that may be implemented in the future may be performed between a network device and a terminal equipment. For example, such traffics may include but not limited to enhanced mobile broadband (eMBB), massive machine type communication (mMTC), ultra-reliable and low-latency communication (URLLC), and vehicle to everything (V2X) communication, etc.

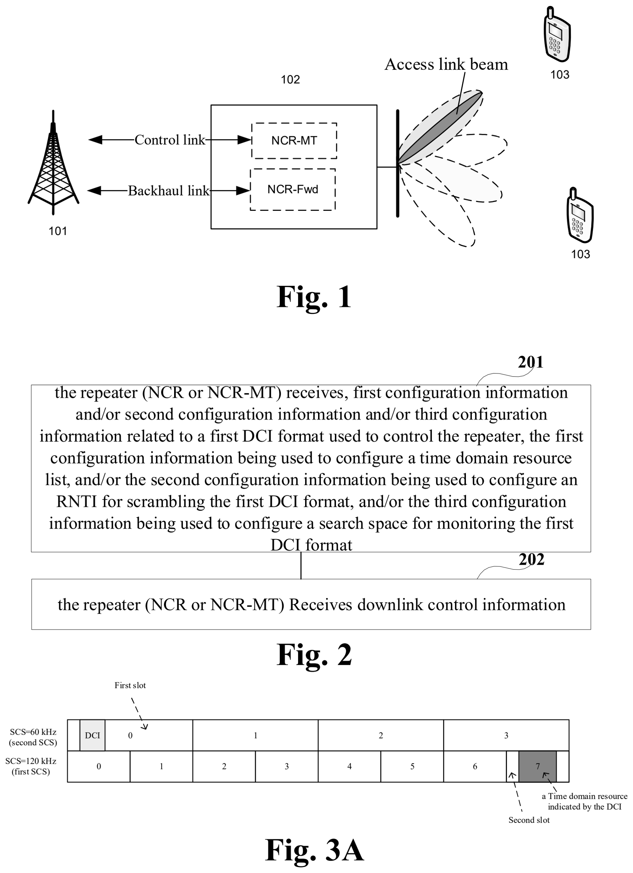

FIG. 1 is schematic diagram of an NCR of embodiments of this disclosure. As shown in FIG. 1, NCR 102 is configured between a network device 101 and a terminal equipment 103. NCR 102 may include the following two modules/components: a mobile termination of the repeater (NCR-MT) and a forwarding unit of the repeater (NCR-Fwd). The NCR-Fwd may also be referred to as a routing unit of the NCR (NCR-RU). The NCR-MT is used for communication with the network device (information exchange), the NCR-Fwd is used for forwarding signals between the network device and the terminal equipment, and the NCR-MT and NCR-Fwd are functional entities, with functions thereof being implemented by identical or different hardware modules.

As shown in FIG. 1, the NCR of the embodiments of this disclosure may have three links: a control link (C-link), a backhaul link (BH-link) for forwarding, and an access link (AC-link, also referred to as an NCR-UE link), wherein the C-link is used for communication between the NCR and the network device, the BH-link is used by the repeater to receive signals to be forwarded from the network device, or forward signals from the terminal equipment to the network device, and the AC-link is used by the repeater to forward signals from the network device to the terminal equipment, or receive signals to be forwarded from the terminal equipment. Specifically, the NCR-MT communicates with the network device via the C-link, and the NCR-Fwd forwards signals via the BH-link and the AC-link.

In the embodiments of this disclosure, the repeater may communicate with the network device, receive communication channels/signals transmitted by the network device, and demodulate/decode the channels/signals to obtain information transmitted by the network device to the repeater. A signal processing process is hereinafter referred to as "communication". The repeater may also forward channels/signals transmitted between the network device and the terminal equipment, does not demodulate/decode the channels/signals, and may perform amplification, etc. A signal processing process is hereinafter referred to as "forwarding", and "communication" and "forwarding" are collectively referred to as "transmission". In addition, 'performing transmission or reception on the AC link (or the BH link)' may be equivalent to 'performing forwarding on the AC link (or the BH link)', and 'performing transmission or reception on the control link' may be equivalent to 'performing communication on the control link'. The above terms are for convenience of explanation only, and are not intended to limit this disclosure. In some cases, "a forwarding unit" and "a forwarding behavior" are interchangeable.

In the embodiments of this disclosure, the repeater may also be expressed as a network-controlled repeater (NCR), a radio frequency repeater, a relay, a radio frequency relay; or, it may also be expressed as a repeater node, or a relay node; or, it may also be expressed as an intelligent repeater, an intelligent relay, an intelligent repeater node, an intelligent relay node, etc.; however, this disclosure is not limited thereto.

In the embodiments of this disclosure, the network device may be a device of a serving cell of the terminal equipment, or a device in a cell where the repeater is located, or a device of a serving cell of the repeater, or a parent node of the repeater. Names of the repeater are not limited in this disclosure, and any device able to achieve the above functions is included in the scope of the repeater of this disclosure.

In the embodiments of this disclosure, higher-layer signaling may be, for example, radio resource control (RRC) signaling; for example, it includes an RRC message, which includes a master information block (MIB), system information, and a dedicated RRC message; or, it is an RRC information element (RRC IE); or an information field (or an information field included in an information field) included in an RRC message or an RRC information element. Higher-layer signaling may also be, for example, medium access control (MAC) signaling, or referred to as an MAC control element (MAC CE); however, this disclosure is not limited thereto.

In the embodiments of this disclosure, multiple means at least two, or two or more than two.

In the embodiments of this disclosure, "predefined" means defined in a protocol or determined according to a rule defined in a protocol, without needing additional configuration. Configuration/indication refer(s) to configuring/indicating directly or indirectly by a network device via higher-layer signaling and/or physical layer signaling. Configuration/indication may be performed by introducing a higher-layer parameter into the higher-layer signaling, the higher-layer parameter referring to an information field and/or an information element (IE) in the higher-layer signaling. The physical layer signaling refers to, for example, control information (DCI) carried by a physical control channel or control information carried by a sequence; however, it is not limited thereto.

At present, in determining time domain resources corresponding to access link beams, it is considered to introduce a second time position and/or a first time position into a position of a reference point thereof. Currently, how to determine the second time position and/or the first time position, related subcarrier spacings and how to determine positions of the time domain resources based on the second time position and/or the first time position have become urgent problems to be solved. Implementations of the embodiments of this disclosure shall be described below with reference to the accompanying drawings. These implementations are illustrative only, and are not intended to limit this disclosure.

Embodiments of a first aspect

The embodiments of this disclosure provide an information receiving method, which shall be described from a repeater side.

FIG. 2 is a schematic diagram of the information receiving method of the embodiments of this disclosure. As shown in FIG. 2, the method includes:

201: the repeater receives, first configuration information and/or second configuration information and/or third configuration information related to a first DCI format used to control the repeater, the first configuration information being used to configure a time domain resource list, and/or the second configuration information being used to configure an RNTI for scrambling the first DCI format, and/or the third configuration information being used to configure a search space for monitoring the first DCI format; and

202: the repeater receives, downlink control information using the first DCI format, (a position of) a second slot where a first time domain resource is located indicated by the downlink control information being related to a first time position and/or a second time position and/or a third time position, and/or being related to a first parameter and/or a second parameter, and/or being related to a first subcarrier spacing and/or a second subcarrier spacing and/or a third subcarrier spacing.

It should be noted that FIG. 2 only schematically illustrates the embodiments of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIG. 2.

In some embodiments, the DCI (may) has/adopts a first DCI format, the first DCI format being only used for repeaters. The first DCI format or the DCI is used to carry (aperiodic or dynamic) beam indications or side control information, and/or for transmission or notification of (aperiodic/dynamic) beam indications of access links or side control information , and/or for indicating (aperiodic or dynamic) forwarding time resources or forwarding resources, and/or for indicating that the repeater or the forwarding unit of the repeater is on, and/or for indicating that an access link and/or a backhaul link is/are on, and/or, for (aperiodically or dynamically) indicating access link beams and/or time domain resources. The on indicates that the NCR-Fwd (should) forwards signals, or indicates that signals may be forwarded on an access link and/or a backhaul link, including forwarding downlink signals from the network device to the terminal equipment and/or forwarding uplink signals from the terminal equipment to the network device. The first DCI format may be a newly-introduced DCI format (e.g. DCI format 5_0), which is not used for scheduling PDSCHs and/or PUSCHs, and is unicast. However, the embodiments of this disclosure are not limited thereto, and the DCI format may also be an existing DCI format, and/or may be used for scheduling PDSCHs and/or PUSCHs, which is groupcast/multi-cast/broadcast.

In the embodiments of this disclosure, "the downlink control information in the first DCI format" or "the downlink control information using the first DCI format" or "the DCI in the first DCI format" may also be directly referred to as "a first DCI format" in brief, and other DCI formats may also be understood in the same manner.

In some embodiments, the first configuration information and/or the second configuration information and/or the third configuration information may be carried by RRC signaling. The first configuration information related to the first DCI format is used to configure a time domain resource list, and the DCI with the first DCI format may indicate time domain resources for forwarding via this time domain resource list. The time domain resource list is, for example, a list of aperiodic forwarding time resources for an Fwd (NCR-Fwd) access link; however, it is not limited thereto. The first configuration information includes one or more of the following information: first information used for indicating a first value M; second information used for adding and/or modifying time domain resources; third information used for releasing time domain resources; fourth information used for indicating a subcarrier spacing; fifth information used for indicating a bitwidth of the first information field; sixth information used for indicating a bitwidth of the second information field; and seventh information used for indicating a payload size of the first DCI format. The second information field and/or the third information field is/are used to configure a time domain resource list, that is, the second information (such as ncr-AperiodicFwdTimeResourceToAddModList-r18) may configure time domain resources added and modified in the time domain resource list, the third information is used to indicate time domain resources released/removed from the time domain resources configured by the second information, the number of time domain resources in the time domain resource list being able to be determined according to the second information and/or the third information, a subcarrier spacing indicated by the fourth information may be a reference subcarrier spacing of the time domain resources, and the fifth information and sixth information are used to indicate bitwidths of the first information field and second information field, the bitwidths being at least related to a length of the time domain resource list (configured number and/or the number of the time domain resources), the seventh information indicates the payload size of the first DCI format, which is related to bitwidths of the information fields, that is, related to the length of the time domain resource list. The first value M indicated by the first information is related to the number(s) of the first information field and/or the second information field, which shall be described later. Wherein, a value range of the bitwidth of the first information field is {1,2,3,4,5,6}, a value range of the bitwidth of the second information field is {0,1,2,3,4,5,6,7} or {1,2,3,4,5,6,7}. A maximum (payload) size of the first DCI format may be 130 bits, and a maximum value of the first value M is 10. When the first configuration information configures the above information, configurations need to be selected from the above value ranges. If at least one of the above information is not configured by the first configuration information, its value range may also refer to the above example, and the embodiments of this disclosure is not limited thereto.

In some embodiments, the time domain resources and forwarding time domain resources or time domain resource configurations or forwarding time domain resource configurations are interchangeable, an index and an ID are interchangeable, and a set and a list are interchangeable.

In some embodiments, the second configuration information is used to configure an RNTI for scrambling the first DCI format or the DCI (or a value of an RNTI used to scramble PDCCHs carrying side control information). For example, the RNTI is NCR-RNTI, and is used to scramble CRC of the DCI. The second configuration information ncr-RNTI-r18 is represented by using ASN. 1:

```
PhysicalCellGroupConfig ::=        SEQUENCE {

...

    ncr-RNTI-r18                    RNTI-Value

        OPTIONAL,     -- Cond NCR
```

In some embodiments, the third configuration information is used to configure a search space for monitoring the first DCI format. For example, the third configuration information includes tenth information dci-FormatsNCR-r18 used for indicating the NCR-MT to monitor the first DCI format (in the search space configured by the configuration information). The search space in which the first DCI format is monitored is determined according to the third configuration information, and the DCI in the first DCI format is received in the search space. The third configuration information SearchSpace is represented by using ASN. 1:

```
SearchSpace ::=                    SEQUENCE {

...

searchSpaceType                    CHOICE {

    ...


    ue-Specific                        SEQUENCE {

        ...

        dci-FormatsNCR-r18             ENUMERATED {formats5-0}

        OPTIONAL,      -- Need R

            ]]

        }
```

In some embodiments, the repeater (NCR-MT) may monitor the first DCI format in a common search space (CSS) and/or a UE specific search space (USS), or, receive the DCI in the first DCI format. That is, the search space configured by the third configuration information is a common search space (CSS) or a UE-specific search space. When there are multiple third configuration information, the types of search spaces (CSSs/USSs) configured by different third configuration information may be identical or different.

In some embodiments, the first DCI format and/or the DCI includes a first information field, and includes or does not include a second information field. When the time domain resource list includes a configuration of one time domain resource, the DCI may possibly not include the second information field, and the first time domain resource indicated by the DCI is the one time domain resource.

In some embodiments, (a position of) a second slot where the first time domain resource indicated by the DCI (such as the second information field) is located is related to a first time position and/or a second time position and/or a third time position, and/or is related to a first parameter and/or a second parameter, and/or is related to a first subcarrier spacing and/or a second subcarrier spacing and/or a third subcarrier spacing. Or, in other words, (a position of) a second slot where (the first time domain resource) indicated by the downlink control information is located is determined according to a first time position and/or a second time position and/or a third time position, and/or is a first parameter and/or a second parameter, and/or a first subcarrier spacing and/or a second subcarrier spacing and/or a third subcarrier spacing. The repeater performs forwarding on the first time domain resource. The second slot is a slot where the first time domain resource (indicated by the DCI) is located and/or a first one of slots where the first time domain resource is located and/or a slot where a first one of symbols of the first time domain resource is located. The second slot is based on the first subcarrier spacing.

In some embodiments, for the case where the DCI includes multiple second information fields or indicates multiple time domain resources (indicated by identical or different second information fields), (positions of) second slots where different second information fields or different time domain resources are located are related to the first time position and/or the second time position and/or the third time position, and/or are related to the first parameter and/or the second parameter, and/or are related to the first subcarrier spacing and/or the second subcarrier spacing and/or the third subcarrier spacing.

How to determine the position of the second slot where the first time domain resource is located shall be described below in detail.

The first subcarrier spacing, the second subcarrier spacing and the third subcarrier spacing shall be described first.

In some embodiments, the first subcarrier spacing denotes a subcarrier spacing configured by fourth information and/or a reference subcarrier spacing of the time domain resources, and a length of the time domain resources is related to the first subcarrier spacing, i.e. the first subcarrier spacing is at least used to determine the length of the time domain resources. That is, the length of time domain resources is based on the first subcarrier spacing. For example, the second information field in the DCI indicates that the length of the time domain resources determined by the configuration in the time domain resource table is L, which means that the time domain resources include a first number (L) of time units (slots and/or symbols) with the first subcarrier spacing. A starting position of the time domain resources is related to the first subcarrier spacing. The starting position includes a starting slot and/or a starting symbol. For example, this fourth information is used to configure the reference subcarrier spacing of the time domain resources indicated by the DCI. A value range of the first subcarrier spacing is as shown in Table 1 or Table 2 below:

Table 1

| $\mu$ | $\Delta f = 2^{\mu} \cdot 15$ [kHz] | Frequency range (FR1/FR2-1) | Note |
|---|---|---|---|
| 0 | 15 | FR1 | The subcarrier spacing is only applicable to carriers of FR1 |
| 1 | 30 | FR1 | The subcarrier spacing is only applicable to carriers of FR1 |
| 2 | 60 | FR1 or FR2-1 | The subcarrier spacing is applicable to carriers of FR1 and carriers of FR2-1 |
| 3 | 120 | FR2-1 | The subcarrier spacing is only applicable to carriers of FR2-1 |
| 4 | 240 | FR-1 | The subcarrier spacing is only applicable to carriers of FR2-1 |

Table 2

| $\mu$ | $\Delta f = 2^{\mu} \cdot 15$[kHz] | Frequency range (FR1/FR2-1/FR2-2) | Note |
|---|---|---|---|
| 0 | 15 | FR1 | The subcarrier spacing is only applicable to carriers of FR1 |
| 1 | 30 | FR1 | The subcarrier spacing is only applicable to carriers of FR1 |
| 2 | 60 | FR1 or FR2-1 | The subcarrier spacing is applicable to carriers of FR1 and carriers of FR2-1 |
| 3 | 120 | FR2-1 | The subcarrier spacing is only applicable to carriers of FR2-1 |

(continued)

| $\mu$ | $\Delta f = 2^{\mu} \cdot 15$[kHz] | Frequency range (FR1/FR2-1/FR2-2) | Note |
|---|---|---|---|
| 4 | 240 | FR-1 | The subcarrier spacing is only applicable to carriers of FR2-1 |
| 5 | 480 | FR2-2 | The subcarrier spacing is only applicable to carriers of FR2-2 |
| 6 | 960 | FR2-2 | The subcarrier spacing is only applicable to carriers of FR2-2 |

The above description is given by taking Table 1 and Table 2 as examples; however, the embodiments of this disclosure is not limited thereto. For example, values of corresponding first subcarrier spacings may be defined for FR1 and FR2 respectively.

In some embodiments, the second subcarrier spacing denotes a subcarrier spacing of the downlink control information, and/or a subcarrier spacing of a PDCCH carrying the downlink control information, and/or a subcarrier spacing of an active downlink BWP, and/or a subcarrier spacing of a BWP where the downlink control information is located, and/or a subcarrier spacing of a BWP where a PDCCH carrying the downlink control information is located, and/or a subcarrier spacing of a BWP used for monitoring the downlink control information. The active DL BWP refers to an active downlink BWP (of the NCR-MT/the C-link) when the downlink control information is received. A value range of the second subcarrier spacing is as shown in Table 3 or Table 4 below:

Table 3

| $\mu$ | $\Delta f = 2^{\mu} \cdot 15$[kHz] | Frequency range (FR1/FR2-1) | Note |
|---|---|---|---|
| 0 | 15 | FR1 | The subcarrier spacing is only applicable to carriers of FR1 |
| 1 | 30 | FR1 | The subcarrier spacing is only applicable to carriers of FR1 |
| 2 | 60 | FR1 或 FR2-1 | The subcarrier spacing is only applicable to carriers of FR1 and carriers of FR2-1 |
| 3 | 120 | FR2-1 | The subcarrier spacing is only applicable to carriers of FR2-1 |

Table 4

| $\mu$ | $\Delta f = 2^{\mu} \cdot 15$[kHz] | Frequency range (FR1/FR2-1/FR2-2) | Note |
|---|---|---|---|
| 0 | 15 | FR1 | The subcarrier spacing is only applicable to carriers of FR1 |
| 1 | 30 | FR1 | The subcarrier spacing is only applicable to carriers of FR1 |
| 2 | 60 | FR1 或 FR2-1 | The subcarrier spacing is only applicable to carriers of FR2-1 |
| 3 | 120 | FR2-1 | The subcarrier spacing is only applicable to carriers of FR2-1 |
| 5 | 480 | FR2-2 | The subcarrier spacing is only applicable to carriers of FR2-2 |
| 6 | 960 | FR2-2 | The subcarrier spacing is only applicable to carriers of FR2-2 |

Wherein, as the subcarrier spacing for the DCI is not applicable to 240kHz, the value range of the second subcarrier spacing does not include 240kHz.

The above description is given by taking Table 3 and Table 4 as examples only; however, the embodiments of this disclosure is not limited thereto. For example, values of corresponding second subcarrier spacings may be defined respectively for FR1 and FR2.

In some embodiments, the third subcarrier spacing denotes a subcarrier spacing for/based upon which the first parameter and/or the third parameter is/are defined and/or reported and/or configured, and a value range thereof is identical to the value range of the first subcarrier spacing or the second subcarrier spacing, or a value range thereof is different from the value ranges of the first subcarrier spacing and the second subcarrier spacing. Following description shall be given for different cases.

For example, subcarrier spacings are respectively defined for different frequency ranges, wherein for a frequency range, the third subcarrier spacing is equal to/is an SCS in a value range of an (first and/or second) SCS supported by the frequency range or an SCS in a value range of an (first and/or second) SCS supported by another frequency range. Following are some examples, but other combinations are not excluded, such as 30kHz for FR1, and 120kHz for FR2.

Example 1: assuming that for a frequency range, the third subcarrier spacing is equal to/is for a minimum SCS in a value range of an (first and/or second) SCS supported by the frequency range (specific values in the table below are based on the above examples of value ranges for the first/second SCS), as shown in Table 5:

Table 5

| $\mu$ | $\Delta f = 2^{\mu} \cdot 15$[kHz] | Frequency range (FR1/FR2-1) | Note |
|---|---|---|---|
| 0 | 15 | FR1 | The subcarrier spacing is only applicable to carriers of FR1 |
| 2 | 60 | FR2-1 | The subcarrier spacing is only applicable to carriers of FR2-1 |

Example 2: assuming that for a frequency range, the third subcarrier spacing is equal to/is for a maximum SCS in a value range of an (second) SCS supported by the frequency range (specific values in the table below are based on the above examples of value ranges for the second SCS), as shown in Table 6:

Table 6

| $\mu$ | $\Delta f = 2^{\mu} \cdot 15$[kHz] | Frequency range (FR1/FR2-1) | Note |
|---|---|---|---|
| 2 | 60 | FR1 | The subcarrier spacing is only applicable to carriers of FR1 |
| 3 | 120 | FR2-1 | The subcarrier spacing is only applicable to carriers of FR2-1 |

Example 3: assuming that for a frequency range, the third subcarrier spacing is equal to/is for a maximum SCS in a value range of an (first) SCS supported by the frequency range (specific values in the table below are based on the above examples of value ranges for the first SCS), as shown in Table 7:

Table 7

| $\mu$ | $\Delta f = 2^{\mu} \cdot 15$[kHz] | Frequency range (FR1/FR2-1) | Note |
|---|---|---|---|
| 2 | 60 | FR1 | The subcarrier spacing is only applicable to carriers of FR1 |
| 4 | 240 | FR2-1 | The subcarrier spacing is only applicable to carriers of FR2-1 |

For example, only one subcarrier spacing is defined for only one frequency range (e.g. only for FR2-1) or for multiple frequency ranges (e.g. for FR1 and FR2-1).

Example 1: it is assumed that the first and/or second SCS(s) is/are applicable to both FR1 and FR2-1, as shown in Table 8:

Table 8

| $\mu$ | $\Delta f = 2^{\mu} \cdot 15$[kHz] | Frequency range (FR1/FR2-1) | Note |
|---|---|---|---|
| 2 | 60 | FR1 or FR2-1 | The subcarrier spacing is only applicable to carriers of FR1 and carriers of FR2-1 |

Example 2: it is assumed a minimum SCS for the first and/or second SCS(s), as shown in Table 9:

Table 9

| $\mu$ | $\Delta f = 2^{\mu} \cdot 15$[kHz] | Frequency range (FR1/FR2-1) | Note |
|---|---|---|---|
| 0 | 15 | FR1 or FR2-1 | The subcarrier spacing is only applicable to carriers of FR1 and carriers of FR2-1 |

Example 3: it is assumed a maximum SCS for the first SCS, as shown in Table 10:

Table 10

| $\mu$ | $\Delta f = 2^{\mu} \cdot 15$[kHz] | Frequency range (FR1/FR2-1) | Note |
|---|---|---|---|
| 3 | 120 | FR1 or FR2-1 | The subcarrier spacing is only applicable to carriers of FR1 and carriers of FR2-1 |

Example 4: it is assumed a maximum SCS for the second SCS, as shown in Table 11:

Table 11

| $\mu$ | $\Delta f = 2^{\mu} \cdot 15$[kHz] | Frequency range (FR1/FR2-1) | Note |
|---|---|---|---|
| 3 | 240 | FR1 or FR2-1 | The subcarrier spacing is only applicable to carriers of FR1 and carriers of FR2-1 |

In some embodiments, 2 or 3 of the first subcarrier spacing, the second subcarrier spacing and the third subcarrier spacing are identical or different, or, 2 or 3 of the first subcarrier spacing, the second subcarrier spacing and the third subcarrier spacing are subcarrier spacings for the same frequency range or for different frequency ranges.

For example, for a single or one received DCI/DCI two or three of the first subcarrier spacing, the second subcarrier spacing and the third subcarrier spacing (if any) (e.g. the first and second subcarrier spacings, the first and third subcarrier spacings, the second and third subcarrier spacings, the first, second and third subcarrier spacings) must/should be subcarrier spacings for the same frequency range, or may be subcarrier spacings for different frequency ranges (of course, they may also be subcarrier spacings for the same frequency range, that is, whether they are for the same frequency range is not limited).

For example, for a single or one received DCI, two or three of the first subcarrier spacing, second subcarrier spacing and third subcarrier spacing (if any) must/should be identical, or may be different. In the case where 2 or 3 of them must/should be identical, 2 or 3 of them that must/should be identical may be interchangeable. For example, when the first SCS and the second SCS are identical, they may be interchangeable.

The first time position, the second time position and the third time position (assuming that the first subcarrier spacing is $\mu_1$, the second subcarrier spacing is $\mu_2$, the third subcarrier spacing is $\mu_3$, the first parameter is $k_1$, the second parameter is $k_2$, and the third parameter is $k_3$) shall be described below.

In some embodiments, the first time position includes: a first slot or a first one of slots after a first slot; and/or, a fifth slot or a first one of slots after a fifth slot; and/or, a symbol position of the downlink control information or a symbol position of a PDCCH carrying the downlink control information.

In some embodiments, the first time position may be a repetition/first repetition/last repetition (a/first/last (second SCS and/or first SCS-based)) symbol of the DCI/PDCCH.

In some embodiments, the first slot is based on the second subcarrier spacing and is a slot where the downlink control information or the PDCCH carrying the downlink control information is located, including that the first slot is a slot or a first one of slots or a last slot where the downlink control information or the PDCCH carrying the downlink control information is located, or a slot where a symbol of which the downlink control information or the PDCCH carrying the downlink control information is located is located. For example, the first slot is a downlink slot where a repetition/a first repetition/a last repetition of the DCI/PDCCH is/are located, or a slot/a first one of slots/a last slot where a repetition/a first repetition/a last repetition of the DCI/PDCCH is/are located, or a slot where a symbol/a first one of symbols/a last one of symbols of a repetition/a first repetition/a last repetition of the DCI/PDCCH is/are located, wherein the first time position may be (an end/a last symbol/an end of a last symbol of) a first slot or (an end/a last symbol/an end of a last symbol of) first one of slots after the first slot.

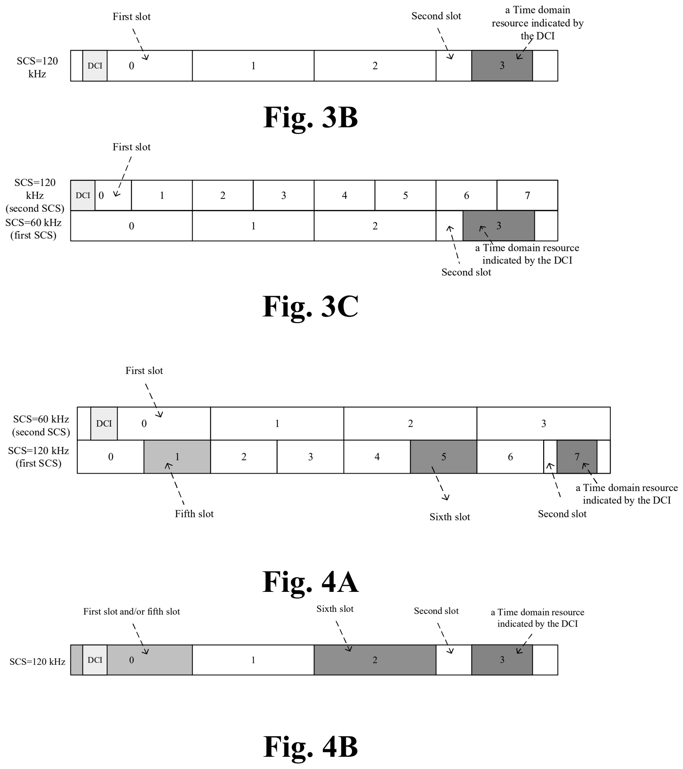

FIGs. 3A-3C are schematic diagrams of a first slot of the embodiments of this disclosure. As shown in FIG. 3A, when the first subcarrier spacing is greater than the second subcarrier spacing, a position of the first slot is the slot where the downlink control information or the PDCCH carrying the downlink control information is located. As shown in FIG. 3B, when the first subcarrier spacing is equal to the second subcarrier spacing, the position of the first slot is the slot where the downlink control information or the PDCCH carrying the downlink control information is located. As shown in FIG. 3C, when the first subcarrier spacing is smaller than the second subcarrier spacing, the position of the first slot is the slot where the downlink control information or the PDCCH carrying the downlink control information is located. How to determine a position of the second slot according to the first slot (first time position) shall be described later in detail.

In some embodiments, the fifth slot is based on the first subcarrier spacing, and is a slot overlapping with the first slot or a slot after an overlapped slot, or a slot overlapping with the slot or symbol where the downlink control information or the PDCCH carrying the downlink control information is located, or a slot with a fourth offset from a slot overlapping with the first slot/a slot with a fourth offset from a slot overlapping with the slot or symbol where the downlink control information or the PDCCH carrying the downlink control information is located, or a slot overlapping with the slot or symbol where the downlink control information or the PDCCH carrying the downlink control information is located. For example, the fifth slot is a slot/a last slot/a first one of slots overlapping (or coinciding) with the first slot, or the fifth slot is a slot/a last slot/a first one of slots overlapping with a repetition/a first repetition/a last repetition of the DCI/PDCCH, or the fifth slot is a slot/a last slot/a first one of slots overlapping with a symbol/a last symbol/a first one of symbols of a repetition/a first repetition/a last repetition of the DCI/PDCCH; however, it is not limited thereto. For example, the fifth slot is a (e.g. first one of) slot after a slot/a last slot/a first one of slots overlapping (or coinciding) with the first slot, that is, it is a (e.g. first) slot after a starting position of the first slot that does not overlap with the first slot, and/or a (e.g. first one of) slot after a slot/a last slot/a first one of slots overlapping with a repetition/a first repetition/a last repetition of the DCI/PDCCH, i.e. a (e.g. first one of) slot after the starting position of the first slot that does not overlap with a repetition/a first repetition/a last repetition of the DCI/PDCCH, and/or a (e.g. first one of) slot after a slot/a last slot/a first one of slots overlapping with a symbol/a last symbol/a first one of symbols of a repetition/a first repetition/a last repetition of the DCI/PDCCH, i.e. a (e.g. first one of) slot after the starting position of the first slot that does not overlap with a symbol/a last symbol/a first one of symbols of a repetition/a first repetition/a last repetition of the DCI/PDCCH. For another example, there exists a fourth offset between the fifth slot and a slot/a last slot/a first one of slots overlapping (or coinciding) with the first slot and/or a slot/a last slot/a first one of slots overlapping with a repetition/a first repetition/a last repetition of the DCI/PDCCH and/or a slot/a last slot/a first one of slots overlapping with a symbol/a last symbol/a first one of symbols of a repetition/a first repetition/a last repetition of the DCI/PDCCH, wherein the fourth offset is an integer greater than or equal to 0; however, it is not limited thereto, and is may be an integer less than 0. For a further example, the fifth slot is a slot where a repetition/a first repetition/a last repetition of the DCI/PDCCH is/are located, or a slot/a first one of slots/a last slot where a repetition/a first repetition/a last repetition of the DCI/PDCCH is/are located, or a slot where a symbol/a first one of symbols/a last one of symbol (based on the second SCS or the first SCS) of a repetition/a first repetition/a last repetition of the DCI/PDCCH is/are located, wherein the first time position may be (an end/a last symbol/an end of the last symbol of) the fifth slot or (a beginning/a first one of symbols/a beginning of the first one of symbols of) a first slot after the fifth slot.

For example, the fifth slot may be represented as $\mathrm{slot}\left\lfloor n \cdot \frac{2^{\mu_1}}{2^{\mu_2}} \right\rfloor$ or $\mathrm{slot}\left\lfloor n \cdot \frac{2^{\mu_1}}{2^{\mu_2}} \right\rfloor + 1$.

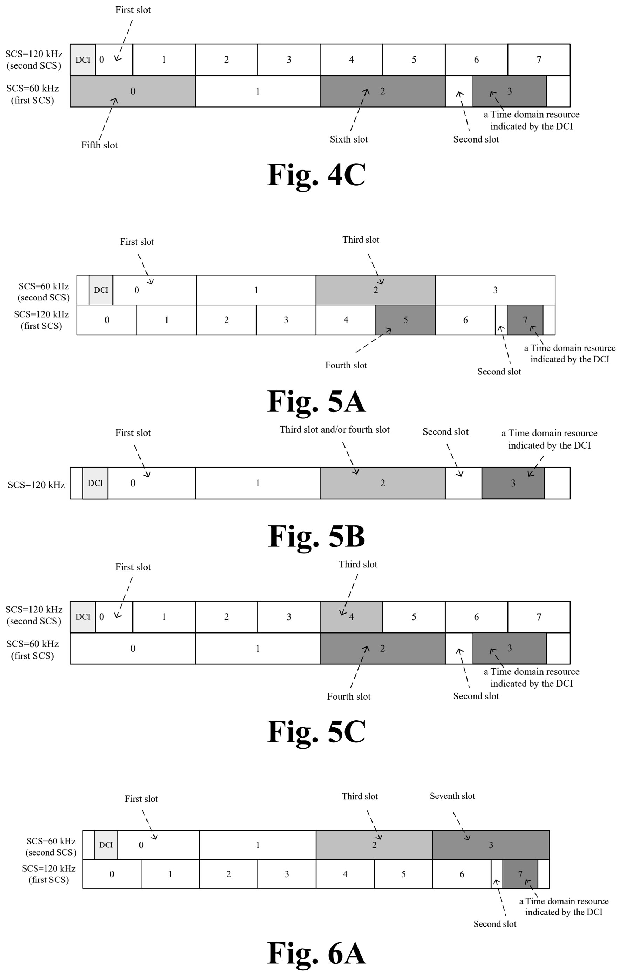

FIGs. 4A-4C are schematic diagrams of the fifth slot of the embodiments of this disclosure. As shown in FIG. 4A, when the first subcarrier spacing is greater than the second subcarrier spacing, a position of the fifth slot is a last slot overlapping (or coinciding) with the first slot (or a last slot overlapping with the slot where the downlink control information is located). As shown in FIG. 4B, when the first subcarrier spacing is equal to the second subcarrier spacing, the position of the fifth slot is a slot overlapping (or coinciding) with the first slot (or a slot overlapping with the slot where the downlink control information is located). As shown in FIG. 4C, when the first subcarrier spacing is smaller than the second subcarrier spacing, the position of the fifth slot is a slot overlapping (or coinciding) with the first slot (or a slot overlapping with the slot where the downlink control information is located). How to determine the position of the second slot according to the fifth slot (the first time position) shall be described later in detail.

In some embodiments, the second time position includes: a third slot or a first one of slots after the third slot; and/or, a fourth slot or a first one of slots after the fourth slot; and/or, a sixth slot or a first one of slots after the sixth slot. The second time position may be regarded as a reference point of a slot offset of the time domain resources indicated by the DCI. The second time position is related to the first parameter, or, in other words, the second time position may be determined according to the first time position and the first parameter.

In some embodiments, the third slot is based on the second subcarrier spacing, and is after the first slot or equivalent to the first slot, and/or is determined by/based on the first parameter (which shall be described in an embodiment later). The second time position is an end/a last symbol/an end of the last symbol of the third slot or a beginning/a first one of symbols/a beginning of the first one of symbols of a first one of slots after the third slot.

In some embodiments, the fourth slot is based on the first subcarrier spacing, and is a slot that overlaps or does not overlap with the third slot, or there exists a third offset between the fourth slot and the third slot. For example, the fourth slot is a slot/a last slot/a first one of slots that overlaps (or coincides) with the third slot; however, it is not limited thereto. For example, the fourth slot is a (e.g. first one of) slot that does not overlap with the third slot. For another example, there exists a third offset between the fourth slot and a slot/a last slot/a first one of slots that overlaps (or coincides) with the third slot, wherein the third offset is an integer greater than or equal to 0; however, it is not limited thereto, and it may be an integer less than 0. The second time position may be an end/a last symbol/an end of the last symbol of the fourth slot or a beginning/a first one of symbols/a beginning of the first one of symbols of a first one of slots after the fourth slot.

FIGs. 5A-5C are schematic diagrams of the third slot and the fourth slot of the embodiments of this disclosure. As shown in FIG. 5A, when the first subcarrier spacing is greater than the second subcarrier spacing, the third slot is determined based on the first slot (in combination with the first parameter), and the fourth slot is a last slot that overlaps with the third slot. As shown in FIG. 5B, when the first subcarrier spacing is equal to the second subcarrier spacing, the third slot is equivalent to the fourth slot. As shown in FIG. 5C, when the first subcarrier spacing is smaller than the second subcarrier spacing, the third slot is determined based on the first slot (in combination with the first parameter), and the fourth slot is a slot overlapping with the third slot. How to determine the second slot according to the third slot or the fourth slot (the second time position) and how to determine a position of the third slot or the fourth slot (such as based on the first slot and the first parameter) shall be described later.

In some embodiments, the sixth slot is based on the first subcarrier spacing, and is after the fifth slot or equivalent to the fifth slot, and/or is determined by/according to the first parameter (which shall be described in an embodiment later). The second time position may be an end/a last symbol/an end of the last symbol of the sixth slot or a beginning/a first one of symbols/a beginning of the first one of symbols of a first slot after the sixth slot. As shown in FIGs. 4A-4C, a position of the sixth slot is determined based on the first parameter, and the position of the second slot is determined based on the sixth slot and the second parameter. How to determine the sixth slot (according to the fifth parameter and the first parameter) and how to determine the position of the second slot according to the sixth slot shall be described later in detail.

In some embodiments, the third time position includes: a seventh slot or a first one of slots after the seventh slot. The seventh slot is based on the second subcarrier spacing, and the third time position is related to the second parameter, or, in other words, the third time position may be determined according to the second time position and the second parameter. The second time position may be an end/a last one of symbols/an end of the last one of symbols of the seventh slot or a beginning/a first one of symbols/a beginning of the first one of symbols of a first one of slots after the seventh slot. The second slot is a (last/first one of) slot overlapping (or coinciding) with the seventh slot. However, it is not limited thereto, for example, the second slot is a (e.g. first one of) slot that does not overlap with the seventh slot. For another example, there exists a fifth offset between the second slot and a (last/first one of) slot that overlaps (or coincides) with the seventh slot, wherein the fifth offset is an integer greater than or equal to 0; however, it is not limited thereto, and it may be an integer less than 0.

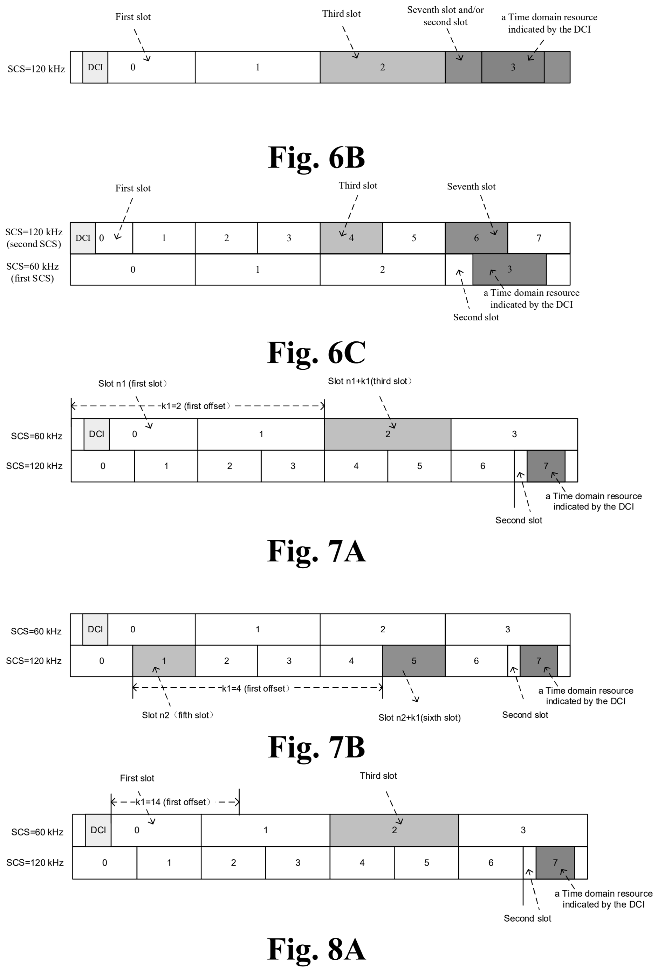

FIGs. 6A-6C are schematic diagrams of the seventh slot of the embodiments of this disclosure. As shown in FIG. 6A, when the first subcarrier spacing is greater than the second subcarrier spacing, the second slot is a slot that overlaps with the seventh slot. As shown in FIG. 6B, when the first subcarrier spacing is equal to the second subcarrier spacing, the seventh slot is equivalent to the second slot. As shown in FIG. 6C, when the first subcarrier spacing is smaller than the second subcarrier spacing, the second slot is a slot that overlaps with the seventh slot. How to determine the seventh slot (the third time position) according to the third slot (the second time position) and how to determine the positions of the third slot and the second slot shall be described later in detail.

The above parameters and how to determine the time positions and the position of the second slot of the time domain resources according to the parameters shall be described below respectively.

The first parameter shall be described below.

In some embodiments, the first parameter represents the first offset (which may be interchangeable in some cases), the first offset referring to an offset relative to the first time position and being used to determine the second slot and/or the third slot (and/or the fourth slot) and/or the sixth slot (and/or the seventh slot). For example, the first parameter/first offset is/are an integer/integers greater than or equal to 0; however, it is not limited thereto, and it/they may be an integer/integers less than 0.

In some embodiments, the first parameter/first offset is/are equivalent to the third parameter (which may be interchangeable), or is/are determined by/based on/according to the third parameter and/or the first SCS and/or the second SCS and/or the third SCS.

In some embodiments, the first parameter is in a unit of a slot or a symbol or an absolute time, i.e. the first parameter/the first offset is/are the number of slots or he number of symbols or the number of absolute times (e.g. ms, etc.) (based on the first SCS and/or the second SCS and/or the third SCS).

For example, the third slot (and/or the fourth slot) and/or the sixth slot (and/or the seventh slot) is/are a slot/slots (based on the first SCS and/or the second SCS) with a first offset relative to the first time position. That is, the first parameter/the first offset is/are used to denote an offset between the third slot (and/or the fourth slot) and/or the sixth slot (and/or the seventh slot) and the first time position, or is/are a (first one of) slot (based on the first SCS and/or the second SCS) after (at least) the first offset from the first time position. That is, the first parameter/first offset is/are used to denote a minimum offset between the third slot (and/or the fourth slot) and/or the sixth slot (and/or the seventh slot) and the first time position.

For example, the third slot may be expressed as:

example 1: slot n + $k_1$; where, n is the first slot, $k_1$ is based on the second subcarrier spacing $\mu_2$.

For example, $k_1$ is the number of slots based on the second subcarrier spacing $\mu_2$ or the first slot offset (first offset).

For example, $k_1 = \left\lceil k_3 \cdot \frac{2^{\mu_2}}{2^{\mu_3}} \right\rceil$, or, $k_1 = \left\lfloor k_3 \cdot \frac{2^{\mu_2}}{2^{\mu_3}} \right\rfloor + 1$; where, $k_3$ is based on the third subcarrier spacing $\mu_3$; for example, $k_3$ is the number of slots based on the third subcarrier spacing $\mu_3$ or the first slot offset (the number of slots of the first offset or the first slot offset (first offset)).

For example, $k_1 = \left\lceil k_3 \cdot \frac{2^{\mu_2}}{2^{\mu_1}} \right\rceil$, or, $\left\lfloor k_3 \cdot \frac{2^{\mu_2}}{2^{\mu_1}} \right\rfloor + 1$; where, $k_3$ is based on the first subcarrier spacing $\mu_1$; for example, $k_3$ is the number of slots based on the first subcarrier spacing $\mu_1$ or the first slot offset (the number of slots of the first offset or the first slot offset (first offset)).

Example 2: slot $n + \left\lceil k_1 \cdot \frac{2^{\mu_2}}{2^{\mu_3}} \right\rceil$, or, slot $n + \left\lfloor k_1 \cdot \frac{2^{\mu_2}}{2^{\mu_3}} \right\rfloor + 1$; where, n is the first slot, and $k_1$ is based on the third subcarrier spacing $\mu_3$.

For example, $k_1$ is the number of slots based on the third subcarrier spacing $\mu_3$ or the first slot offset (the number of slots of the first offset or the first slot offset (first offset)).

Example 3: slot $n + \left\lceil k_1 \cdot \frac{2^{\mu_2}}{2^{\mu_1}} \right\rceil$, or slot $n + \left\lfloor k_1 \cdot \frac{2^{\mu_2}}{2^{\mu_1}} \right\rfloor + 1$; where, n is the first slot, and $k_1$ is based on the first subcarrier spacing $\mu_1$.

For example, $k_1$ is the number of slots based on the first subcarrier spacing $\mu_1$ or the first slot offset (the number of slots of the first offset or the first slot offset (first offset)).

For example, the fourth slot may be expressed as:

Example: $\text{slot} \left\lfloor (n + k_1) \cdot \frac{2^{\mu_1}}{2^{\mu_2}} \right\rfloor$, ; where, n is the first slot, and $k_1$ is based on the second subcarrier spacing $\mu_2$.

For example, $k_1$ is the number of slots based on the second subcarrier spacing $\mu_2$ or the first slot offset (the first offset).

For example, $k_1 = \left\lceil k_3 \cdot \frac{2^{\mu_2}}{2^{\mu_3}} \right\rceil$ or, $k_1 = \left\lfloor k_3 \cdot \frac{2^{\mu_2}}{2^{\mu_3}} \right\rfloor + 1$; where, $k_3$ is based on the third subcarrier spacing $\mu_3$; for example, $k_3$ is the number of slots based on the third subcarrier spacing $\mu_3$ or the first slot offset (the number of slots of the first offset or the first slot offset (first offset)).

For example, $k_1 = \left\lceil k_3 \cdot \frac{2^{\mu_2}}{2^{\mu_1}} \right\rceil$, or, $k_1 = \left\lfloor k_3 \cdot \frac{2^{\mu_2}}{2^{\mu_1}} \right\rfloor + 1$; where, $k_3$ is based on the first subcarrier spacing $\mu_1$; for example, $k_3$ is the number of slots based on the first subcarrier spacing $\mu_1$ or the first slot offset (the number of slots of the first offset or the first slot offset (first offset)).

Example: slot $\left\lfloor \left(n + \left\lceil k_1 \cdot \frac{2^{\mu_2}}{2^{\mu_3}} \right\rceil\right) \cdot \frac{2^{\mu_1}}{2^{\mu_2}} \right\rfloor$, or, slot $\left\lfloor \left(n + \left\lfloor k_1 \cdot \frac{2^{\mu_2}}{2^{\mu_3}} \right\rfloor + 1\right) \cdot \frac{2^{\mu_1}}{2^{\mu_2}} \right\rfloor$; where, n is the first slot, and $k_1$ is based on the third subcarrier spacing $\mu_3$.

For example, $k_1$ is the number of slots based on the third subcarrier spacing $\mu_3$ or the first slot offset (the number of slots of the first offset or the first slot offset (the first offset)); for example, $k_1 \geq 1$, or, $k_1 \geq 0$.

Example: slot $\left\lfloor \left(n + \left\lceil k_1 \cdot \frac{2^{\mu_2}}{2^{\mu_1}} \right\rceil\right) \cdot \frac{2^{\mu_1}}{2^{\mu_2}} \right\rfloor$, or, slot $\left\lfloor \left(n + \left\lfloor k_1 \cdot \frac{2^{\mu_2}}{2^{\mu_1}} \right\rfloor + 1\right) \cdot \frac{2^{\mu_1}}{2^{\mu_2}} \right\rfloor$; where, n is the first slot, and $k_1$ is based on the first subcarrier spacing $\mu_1$.

For example, $k_1$ is the number of slots based on the first subcarrier spacing $\mu_1$ or the first slot offset (the number of slots of the first offset or the first slot offset (the first offset)).

For example, the sixth slot may be expressed as:

Example: slot $\left\lfloor n \cdot \frac{2^{\mu_1}}{2^{\mu_2}} \right\rfloor + k_1$; where, n is the first slot, and $k_1$ is based on the first subcarrier spacing $\mu_1$.

For example, $k_1$ is the number of slots based on the first subcarrier spacing $\mu_1$ or the first slot offset (the first offset).

Example: slot n + $k_1$; where, n is the fifth slot, $k_1$ is based on the first subcarrier spacing $\mu_1$.

For example, $k_1$ is the number of slots based on the first subcarrier spacing $\mu_1$ or the first slot offset (the first offset).

FIGs. 7A-7B are schematic diagrams of how to determine other types of slots (such as the second time position) by the first parameter in a unit of a slot. As shown in FIG. 7A, the first parameter is the first offset k1=2, which is an offset relative to the first slot (slot n1), and is based on the second SCS. The third slot (the second time position) is a slot n1+k1 (based on the second SCS) that has an offset k1 from the first slot (the first time position). As shown in FIG. 7B, the first parameter is the first offset k1=4, which is an offset relative to the fifth slot (slot n2), and is based on the first SCS. The sixth slot (the second time position) is a slot n2+k1 (based on the first SCS) that has an offset k1 from the fifth slot (the first time position).

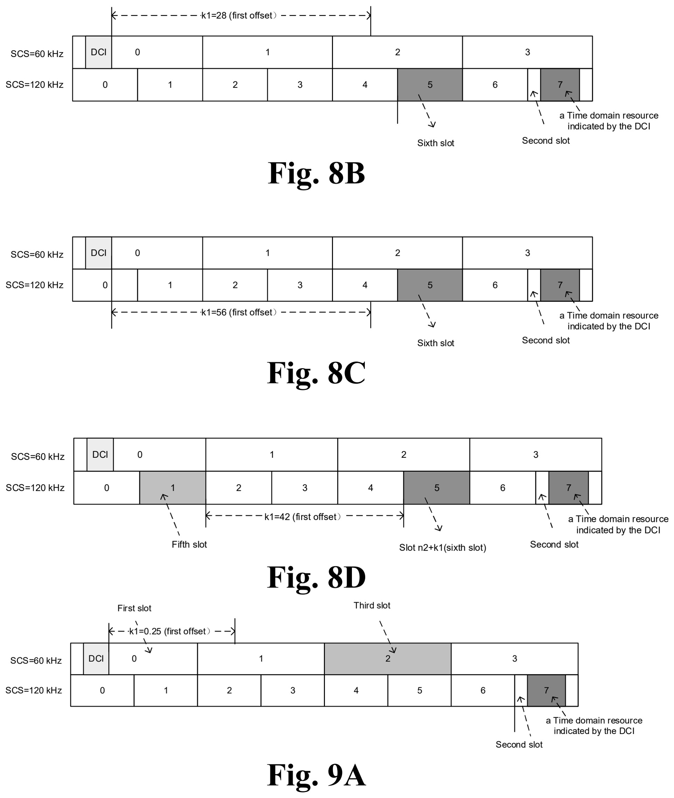

FIGs. 8A-8D are schematic diagrams of how to determine other types of slots (such as the second time position) by the first parameter in a units of a symbol. As shown in FIG. 8A, the first parameter is the first offset k1=14, which is an offset relative to a (one first one of/last one of) symbol (first time position) (based on the second SCS) of (a repetition/a first repetition/a last repetition of) the DCI/PDCCH, and is based on the second SCS. The third slot (the second time position) is a first one of slots (based on the second SCS) at least k1 (symbols) after the (one first one of/last one of) symbol (first time position) (based on the second SCS) of (a repetition/a first repetition/a last repetition of) the DCI/PDCCH. As shown in FIG. 8B, the first parameter is the first offset k1=28, which is an offset relative to a (one first one of/last one of) symbol (first time position) (based on the second SCS) of (a repetition/a first repetition/a last repetition of) the DCI/PDCCH, and is based on the second SCS. The sixth slot (the second time position) is a first one of slots (based on the first SCS) at least k1 (symbols) after the (one/first one of/last one of) symbol (based on the second SCS) of (a repetition/a first repetition/a last repetition of) the DCI/PDCCH. As shown in FIG. 8C, the first parameter is the first offset k1=56, which is an offset relative to a (one first one of/last one of) symbol (first time position) (based on the first SCS and/or the second SCS) of (a repetition/a first repetition/a last repetition of) the DCI/PDCCH, and is based on the first SCS. The sixth slot (the second time position) is a first one of slots (based on the first SCS) at least k1 (symbols) after the (one first one of/last one of) symbol (based on the second SCS and/or the first SCS) of (a repetition/a first repetition/a last repetition of) the DCI/PDCCH. As shown in FIG. 8D, the first parameter is the first offset k1=42, which is an offset relative to (an end/a last one of symbols/an end of the last symbol of) a fifth slot or (a beginning/a first one of symbols/a beginning of the first symbol of) a first one of slots (first time position) after the fifth slot, and is based on the first SCS. The sixth slot (the second time position) is (the end/the last one of symbols/the end of the last symbol of) the fifth slot or a first one of slots (based on the first SCS) at least k1 (symbols) after (beginning/a first one of symbols/a beginning of the first symbol of) a first one of slots (first time position) after the fifth slot.

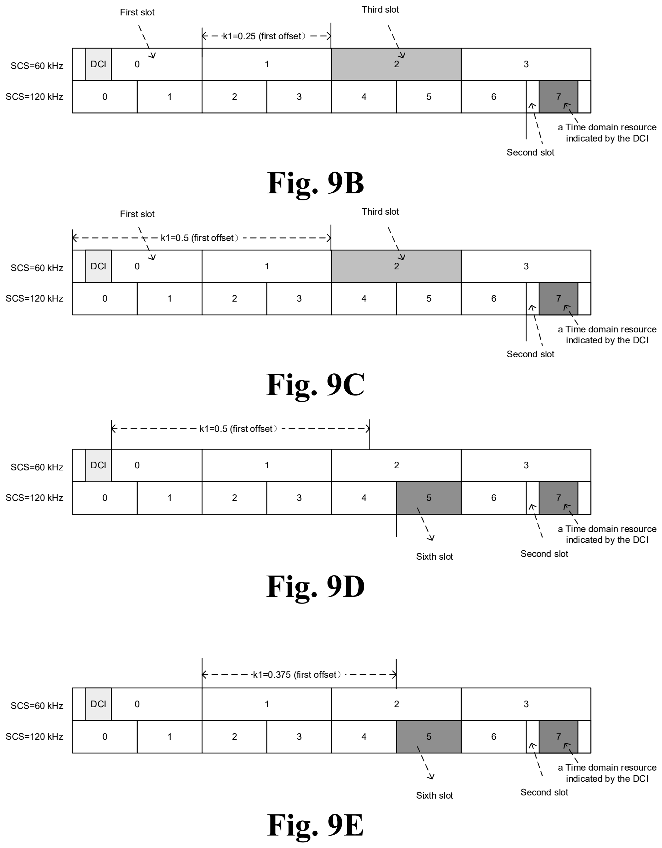

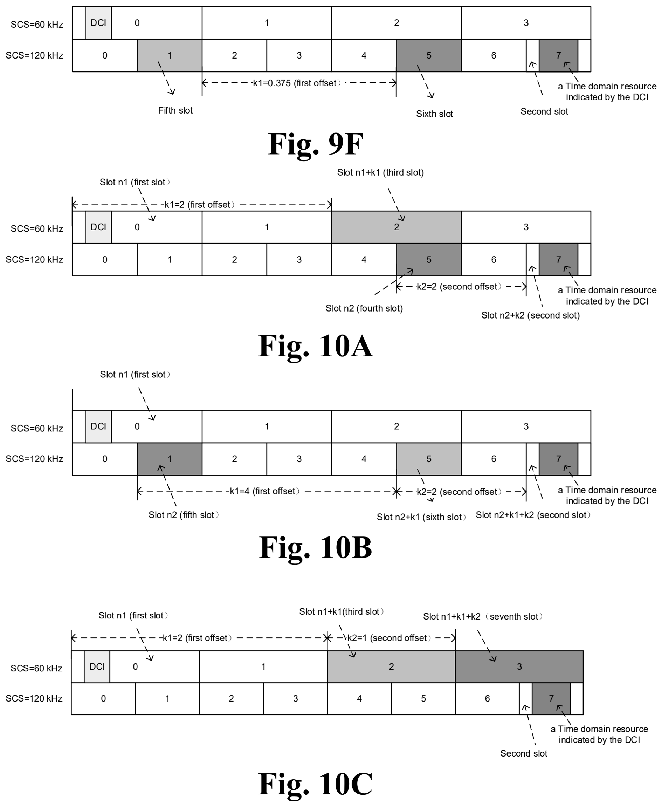

FIGs. 9A-9F are schematic diagrams of how to determine other types of slots (such as the second time position) by the first parameter in a unit of an absolute time. As shown in FIG. 9A, the first parameter is the first offset k1=0.25 (ms), which is an offset relative to a (one/first one of/last one of) symbol (first time position) (based on the second SCS) of (a repetition/a first repetition/a last repetition of) the DCI/PDCCH. The third slot (the second time position) is a first one of slots (based on the second SCS) at least k1 after the (one/first one of/last one of) symbol (based on the second SCS) of (a repetition/a first repetition/a last repetition of) the DCI/PDCCH. As shown in FIG. 9B, the first parameter is the first offset k1=0.25 (ms), which is an offset relative to (an end/a last symbol/an end of the last symbol of) a first slot or (a beginning/a first one of symbols/a beginning of the first one of symbols of) a first one of slots (the first time position) after the first slot. The third slot (the second time position) is (an end/a last symbol/an end of the last symbol of) a first slot or a first one of slots (based on the second SCS) at least k1 after (a beginning/a first one of symbols/a beginning of the first one of symbols of) a first one of slots after the first slot. As shown in FIG. 9C, the first parameter is the first offset k1=0.5 (ms), which is an offset relative to (a beginning/a first one of symbols/a beginning of the first one of symbols of) a first slot. The third slot (the second time position) is a first one of slots (based on the second SCS) at least k1 after (a beginning/a first symbol/a beginning of the first symbol of) a first slot (the first time position). As shown in FIG. 9D, the first parameter is the first offset k1=0.5 (ms), which is an offset relative to a (one/first one of/last one of) symbol (first time position) (based on the second SCS) of (a repetition/a first repetition/a last repetition of) the DCI/PDCCH. The sixth slot (the second time position) is a first one of slots (based on the first SCS) at least k1 after the (one/first one of/last one of) symbol (based on the first SCS) of (a repetition/a first repetition/a last repetition of) the DCI/PDCCH. As shown in FIG. 9E, the first parameter is the first offset k1=0.375 (ms), which is an offset relative to (an end/a last symbol/an end of the last symbol of) a first slot (first time position). The sixth slot (the second time position) is a first one of slots (based on the second SCS) at least k1 after (the end/the last symbol/the end of the last symbol of) the first slot (the first time position). As shown in FIG. 9F, the first parameter is the first offset k1=0.375 (ms), which is an offset relative to (an end/a last symbol/an end of the last symbol of) a fifth slot (first time position). The sixth slot (the second time position) is a first one of slots (based on the second SCS) at least k1 after (the end/the last symbol/the end of the last symbol of) the fifth slot (the first time position).

The above description is given by taking that the first subcarrier spacing (120kHz) is greater than the second subcarrier spacing (60kHz) as an example; however, the embodiments of this disclosure are not limited thereto, which shall not be enumerated herein any further.

In some embodiments, the second parameter denotes a second offset (which may be interchangeable in some cases), the second offset referring to an offset relative to the second time position and being used to determine the second slot and/or the seventh slot (a third time position). For example, the second parameter/second offset is/are an integer/-integers greater than or equal to 0. For example, a value range of the second parameter/second offset starts from 0 or 1; however, it is not limited thereto, and it/they may be an integer/integers less than 0.

In some embodiments, the second parameter/second offset is/are equivalent to the fourth parameter (which may be interchangeable), or is/are determined by/based on/according to the fourth parameter and/or the first SCS and/or the second SCS and/or the third SCS.

In some embodiments, the second parameter is in a unit of a slot or a symbol or an absolute time, i.e. the second parameter/the second offset is/are the number of slots or the number of symbols or the number of absolute times (e.g. ms, etc.) (based on the first SCS and/or the second SCS and/or the third SCS). For example, the second slot and/or the seventh slot is/are a slot/slots (based on the first SCS and/or the second SCS) with a second offset relative to the second time position. That is, the second parameter/the second offset is/are used to denote an offset between the second slot and/or the seventh slot and the second time position, or is/are a (first one of) slot (based on the first SCS and/or the second SCS) after (at least) the second offset from the second time position. That is, the second parameter/second offset is/are used to denote a minimum offset between the second slot and/or the seventh slot and the second time position.

For example, the seventh slot may be expressed as (such as adding $k_2$ on the basis of the third slot):
Example: slot $n + k_2$; where, n is the third slot, and $k_2$ is based on the second subcarrier spacing $\mu_2$.

Example: slot $n + k_1 + k_2$; where, n is the first slot, and $k_1$ and $k_2$ are based on the second subcarrier spacing $\mu_2$.

Explanations of $k_1$ are identical to those in Example 1 for the third slot.

For $k_2$, for example, $k_2$ is the number of slots based on the second subcarrier spacing $\mu_2$ or the second slot offset (second offset).

Example: slot $n + \left\lceil k_1 \cdot \frac{2^{\mu_2}}{2^{\mu_3}} \right\rceil + k_2$, or, slot $n + \left\lceil k_1 \cdot \frac{2^{\mu_2}}{2^{\mu_3}} \right\rceil + k_2 + 1$; where, n is the first slot, $k_1$ is based on the third subcarrier spacing $\mu_3$, and $k_2$ is based on the second subcarrier spacing $\mu_2$.

For example, $k_1$ is the number of slots based on the third subcarrier spacing $\mu_3$ or the first slot offset (the number of slots of the first offset or the first slot offset (the first offset)) (explanations of $k_1$ are identical to those in Example 2 for the third slot).

For $k_2$, for example, $k_2$ is the number of slots based on the second subcarrier spacing $\mu_2$ or the second slot offset (second offset).

Example: slot $n + \left\lceil k_1 \cdot \frac{2^{\mu_2}}{2^{\mu_1}} \right\rceil + k_2$, or, slot $n + \left\lceil k_1 \cdot \frac{2^{\mu_2}}{2^{\mu_1}} \right\rceil + k_2 + 1$; where, n is the first slot, $k_1$ is based on the first subcarrier spacing $\mu_1$, and $k_2$ is based on the second subcarrier spacing $\mu_2$.

For example, $k_1$ is the number of slots based on the first subcarrier spacing $\mu_1$ or the first slot offset (the number of slots of the first offset or the first slot offset (the first offset)) (explanations of $k_1$ are identical to those in Example 3 for the third slot).

For $k_2$, for example, $k_2$ is the number of slots based on the second subcarrier spacing $\mu_2$ or the second slot offset (second offset).

For example, the second slot may be expressed as: (such as adding $k_2$ on the basis of the fourth slot)

Wherein, $k_2$ is based on the first subcarrier spacing $\mu_1$. For example, $k_2$ is the number of slots based on the first subcarrier spacing $\mu_1$ or the second slot offset (second offset).

Example: $\text{slot}\left\lceil (n + k_1) \cdot \frac{2^{\mu_1}}{2^{\mu_2}} \right\rceil + k_2$; where, n is the first slot, $k_1$ is based on the second subcarrier spacing $\mu_2$.

For example, $k_1$ is the number of slots based on the second subcarrier spacing $\mu_2$ or the first slot offset (first offset).

For example, $k_1 = \left\lceil k_3 \cdot \frac{2^{\mu_2}}{2^{\mu_3}} \right\rceil$, or, $k_1 = \left\lceil k_3 \cdot \frac{2^{\mu_2}}{2^{\mu_3}} \right\rceil + 1$; where, $k_3$ is based on the third subcarrier spacing $\mu_3$; for example, $k_3$ is the number of slots based on the third subcarrier spacing $\mu_3$ or the first slot offset (the number of slots of the first offset or the first slot offset (first offset)).

For example, $k_1 = \left\lceil k_3 \cdot \frac{2^{\mu_2}}{2^{\mu_1}} \right\rceil$, or, $k_1 = \left\lceil k_3 \cdot \frac{2^{\mu_2}}{2^{\mu_1}} \right\rceil + 1$; where, $k_3$ is based on the first subcarrier spacing $\mu_1$; for example, $k_3$ is the number of slots based on the first subcarrier spacing $\mu_1$ or the first slot offset (the number of slots of the first offset or the first slot offset (first offset)).

Example: $\text{slot}\left\lceil \left(n + \left\lceil k_1 \cdot \frac{2^{\mu_2}}{2^{\mu_3}} \right\rceil\right) \cdot \frac{2^{\mu_1}}{2^{\mu_2}} \right\rceil + k_2$ or, $\text{slot}\left\lceil \left(n + \left\lceil k_1 \cdot \frac{2^{\mu_2}}{2^{\mu_3}} \right\rceil + 1\right) \cdot \frac{2^{\mu_1}}{2^{\mu_2}} \right\rceil + k_2$; where, n is the first slot, $k_1$ is based on the third subcarrier spacing $\mu_3$.

For example, $k_1$ is the number of slots based on the third subcarrier spacing $\mu_3$ or the first slot offset (the number of slots of the first offset or the first slot offset (the first offset)); for example, $k_1 \geq 1$, or, $k_1 \geq 0$.

Example: $\text{slot}\left\lceil \left(n + \left\lceil k_1 \cdot \frac{2^{\mu_2}}{2^{\mu_1}} \right\rceil\right) \cdot \frac{2^{\mu_1}}{2^{\mu_2}} \right\rceil + k_2$, or, slot $\left\lceil \left(n + \left\lceil k_1 \cdot \frac{2^{\mu_2}}{2^{\mu_1}} \right\rceil + 1\right) \cdot \frac{2^{\mu_1}}{2^{\mu_2}} \right\rceil + k_2$; where, n is the first slot, $k_1$ is based on the first subcarrier spacing $\mu$.

For example, $k_1$ is the number of slots based on the first subcarrier spacing $\mu_1$ or the first slot offset (the number of slots of the first offset or the first slot offset (the first offset)).

For example, the second slot may be expressed as: (such as adding $k_2$ on the basis of the sixth slot)

Wherein, $k_2$ is based on the first subcarrier spacing $\mu_1$. For example, $k_2$ is the number of slots based on the first subcarrier spacing $\mu_1$ or the second slot offset (second offset).

Example: $\text{slot}\left[n \cdot \dfrac{2^{\mu_1}}{2^{\mu_2}}\right] + k_1 + k_2$ ; where, n is the first slot, $k_1$ is based on the first subcarrier spacing $\mu_1$.

For example, $k_1$ is the number of slots based on the first subcarrier spacing $\mu_1$ or the first slot offset (first offset).

For example, slot $n + k_1 + k_2$; where, n is the fifth slot, and $k_1$ is based on the first subcarrier spacing $\mu_1$.

For example, $k_1$ is the number of slots based on the first subcarrier spacing $\mu_1$ or the first slot offset (first offset)).

FIGs. 10A-10C are schematic diagrams of how to determine a second slot or a seventh slot by the second parameter in a unit of a slot. As shown in FIG. 10A, on the basis of FIG. 7A, the fourth slot n2 is a slot that overlaps with the third slot n1+k1, and the second parameter is the second offset k2=2, which is an offset relative to the fourth slot (slot n2), and is based on the first SCS. The second slot is a slot (based on the first SCS) that has an offset k2 from the fourth slot (the second time position). As shown in FIG. 10B, the second parameter is the second offset k2=2, which is an offset relative to the sixth slot (slot n2+k1), and is based on the first SCS. The second slot is a slot (based on the first SCS) that has an offset k2 from the sixth slot (the second time position). As shown in FIG. 10C, on the basis of FIG. 7A, the second parameter is the second offset k2=1, which is an offset relative to the third slot (slot n1+k1), and is based on the second SCS. The seventh slot (the third time position) is a slot (based on the second SCS) that has an offset k2 from the third slot (the second time position), and the second slot is a (last) slot based on the first SCS that overlaps with the seventh slot.

In some embodiments, the first parameter and the second parameter may further be used to determine a sixth offset, the sixth offset referring to an offset relative to the first time position, and being used to determine the second slot and/or the seventh slot (the third time position).

For example, the second slot and/or seventh slot is/are a slot/slots (based on the first SCS and/or the second SCS) with a sixth offset relative to the first time position, that is, the sixth offset is used to denote an offset between the second slot and/or the seventh slot and the first time position, or, it may be a (first one of) slot (based on the first SCS and/or the second SCS) after (at least) sixth offset from the first time position, that is, the sixth offset is used to denote a minimum offset between the second slot and/or the seventh slot and the first time position. The sixth offset X is related to the first parameter and/or the second parameter and/or the third parameter and/or the fourth parameter, and/or is related to the first subcarrier spacing and/or the second subcarrier spacing and/or the third subcarrier spacing. For example, the sixth offset is equivalent to a sum of a time to which the first offset corresponds and a time to which the second offset corresponds.

The third parameter shall be described below.

In some embodiments, the third parameter and/or the first parameter denote a shortest time needed by the NCR in receiving the DCI and/or applying the indicated beams, wherein the shortest time needed in applying the indicated beams includes a time needed in beam switch and/or a time needed in interaction between the NCR-MT and the NCR-Fwd (e.g. a time needed in providing beam indications (or indicated beams) by the NCR-MT to the NCR -Fwd). The third parameter and/or the first parameter may also have other meanings; however, it is not limited thereto.

In some embodiments, (a value/value range of) the third parameter is related to an SCS (third SCS) (for example, it is the number of symbols and/or the number of slots based on the third SCS, and at this moment, a duration needs to be determined in combination with/according to the SCS) and/or is unrelated thereto (for example, it is an absolute time, and at this moment, a duration needs not to be determined in combination with/according to the SCS). (It is assumed in examples in the following tables that they are related the SCS; however, it is not limited thereto, and mixed cases are not excluded; for example, for different SCSs, some of them are related to the SCSs, while others are unrelated to the SCSs.)

In some embodiments, (a value/value range of) the third parameter is defined and/or reported and/or configured for/(per) SCS and/or frequency range (FR1 and/or FR2-1 and/or FR2-2) and/or UE/(NCR-)MT.

(I) That the third parameter is defined and/or reported and/or configured for SCS refers to defining and/or reporting and/or configuring the third parameter respectively for different SCSs; for example, the third parameters for different SCS are applicable to different first SCSs and/or second SCSs.

For example, the third parameter is defined for/based on the SCS (third SCS). For example, a value is defined/provided in a protocol for an SCS, that is, for an SCS, a defined value range includes only one value.

Table 12 The value range of the third SCS is identical to that of the second SCS

| $\mu$ | $\Delta f = 2^{\mu} \cdot 15$[kHz] | Third parameter [slot] |
|---|---|---|
| 0 | 15 | 1 |

(continued)

| $\mu$ | $\Delta f = 2^{\mu} \cdot 15$[kHz] | Third parameter [slot] |
|---|---|---|
| 1 | 30 | 1 |
| 2 | 60 | 1 or 2 |
| 3 | 120 | 2 |

Table 13 The value range of the third SCS is identical to that of the first SCS

| $\mu$ | $\Delta f = 2^{\mu} \cdot 15$[kHz] | Third parameter [slot] |
|---|---|---|
| 0 | 15 | 1 or 2 |
| 1 | 30 | 1 or 2 |
| 2 | 60 | 1 or 2 or 3 |
| 3 | 120 | 2 or 3 or 4 |

Table 14 The value range of the third SCS is different from those of the first SCS and the second SCS

| $\mu$ | $\Delta f = 2^{\mu} \cdot 15$[kHz] | Third parameter [slot] |
|---|---|---|
| 2 | 60 | 1 or 2 or 3 |
| 3 | 120 | 2 or 3 or 4 |

Table 15 The value range of the third SCS is identical to that of the second SCS

| $\mu$ | $\Delta f = 2^{\mu} \cdot 15$[kHz] | Third parameter [slot] |
|---|---|---|
| 0 | 15 | 2 or 4 or 7 or 8 (or are added with 8 respectively) |
| 1 | 30 | 4 or 7 or 8(or are added with 8 respectively) |
| 2 | 60 | 7 or 8 or 14 or 28(or are added with 14 respectively) |
| 3 | 120 | 14 or 28 (or are added with 28 respectively) |

Table 16 The value range of the third SCS is identical to that of the first SCS

| $\mu$ | $\Delta f = 2^{\mu} \cdot 15$[kHz] | Third parameter [slot] |
|---|---|---|
| 0 | 15 | 2 or 4 or 7 or 8 (or are added with 8 respectively) |
| 1 | 30 | 4 or 7 or 8(or are added with 8 respectively) |
| 2 | 60 | 7 or 8 or 14 or 28(or are added with 14 respectively) |
| 3 | 120 | 14 or 28 (or are added with 28 respectively) |
| 4 | 240 | 28 or 56 (or are added with 56 respectively) |

Table 17 The value range of the third SCS is different from those of the first SCS and the second SCS

| $\mu$ | $\Delta f = 2^{\mu} \cdot 15$[kHz] | Third parameter [slot] |
|---|---|---|
| 2 | 60 | 7 or 8 or 14 or 28(or are added with 14 respectively) |
| 3 | 120 | 14 or 28 (or are added with 28 respectively) |

Or, for example, the value range of the third parameter is defined for/based on the SCS, and/or the value of the third parameter is reported/indicated (by the NCR/NCR-MT) and/or configured/indicated (by a base station). For example, a value range is defined/provided in a protocol for different SCSs, which includes one or more values. At least for an SCS with a value range including multiple values (it may also be for an SCS with a value range including one value/an SCS with a value range including one value is not excluded), one or more values therein need to be reported/indicated (by the NCR/NCR-MT), and/or one value needs to be configured/indicated (by the base station). Wherein, at least for the case where the NCR/NCR-MT report(s)/indicate(s) multiple values, it is needed that the base station further configures/indicates one value.

Table 18

| $\mu$ | $\Delta f = 2^{\mu} \cdot 15$[kHz] | Third parameter [slot] |
|---|---|---|
| 0 | 15 | 1 |
| 1 | 30 | 1 |
| 2 | 60 | {1, 2} |
| 3 | 120 | 2 |

Table 19

| $\mu$ | $\Delta f = 2^{\mu} \cdot 15$[kHz] | Third parameter [slot] |
|---|---|---|
| 0 | 15 | {1, 2} |
| 1 | 30 | {1, 2} |
| 2 | 60 | {1, 2, 3} |
| 3 | 120 | {2, 3, 4} |
| 4 | 240 | {2, 4, 6, 8, 3, 5, 7} |

Table 20

| $\mu$ | $\Delta f = 2^{\mu} \cdot 15$[kHz] | Third parameter [slot] |
|---|---|---|
| 2 | 60 | {1, 2, 3} |
| 3 | 120 | {2, 3, 4} |

Table 21

| $\mu$ | $\Delta f = 2^{\mu} \cdot 15$[kHz] | Third parameter [slot] |
|---|---|---|
| 0 | 15 | {2, 4, 7} or {4, 7} or {7} |
| 1 | 30 | {4, 7, 14} or {7,14} |
| 2 | 60 | {7, 14, 28} |
| 3 | 120 | {14,28} |

Table 22

| $\mu$ | $\Delta f = 2^{\mu} \cdot 15$[kHz] | Third parameter [slot] |
|---|---|---|
| 0 | 15 | {2, 4, 7} or {4, 7} or {7} |
| 1 | 30 | {4, 7, 14} or {7,14} |
| 2 | 60 | {7, 14, 28} |
| 3 | 120 | {14,28} |
| 4 | 240 | {28,56} |

Table 23

| $\mu$ | $\Delta f = 2^{\mu} \cdot 15$[kHz] | Third parameter [slot] |
|---|---|---|
| 2 | 60 | {7, 14, 28} |
| 3 | 120 | {14,28} |

(2) That the third parameter is defined and/or reported and/or configured for frequency range (FR1 and/or FR2-1 and/or FR2-2) refers to defining and/or reporting and/or configuring third parameters for different frequency ranges respectively. For example, the third parameters for different frequency ranges are applicable to different frequency ranges and/or the first SCS and/or the second SCS.

For example, the third parameter is defined for frequency range (FR1 and/or FR2-1 and/or FR2-2). For example, a value for a frequency range is defined/provided in a protocol, that is, for a frequency range, the defined value range includes only one value.

Table 24

| $\mu$ | $\Delta f = 2^{\mu} \cdot 15[\text{kHz}]$ | Third parameter [slot] | Frequency range |
|---|---|---|---|
| 2 | 60 | 1 or 2 or 3 | FR1 |
| 3 | 120 | 2 or 3 or 4 | FR2-1 |

For example, the value range of the third parameter is defined for the frequency range, and/or the value of the third parameter is reported/indicated (by the NCR/NCR-MT) and/or configured/indicated (by the base station). For example, value ranges are defined/provided in a protocol for different frequency ranges respectively, which includes one or more values. At least for a frequency range with a value range including multiple values (it may also be for a frequency range with a value range including one value/a frequency range with a value range including one value is not excluded), one or more values therein need to be reported/indicated (by the NCR/NCR-MT), and/or one value needs to be configured/indicated (by the base station). Wherein, at least for the case where the NCR/NCR-MT report(s)/indicate(s) multiple values, it is needed that the base station further configures/indicates one value.

Table 25

| $\mu$ | $\Delta f = 2^{\mu} \cdot 15[\text{kHz}]$ | First parameter [symbol] | Frequency range |
|---|---|---|---|
| 2 | 60 | {7, 14, 28} | FR1 |
| 3 | 120 | {14,28} | FR2 |

(3) That the third parameter is defined and/or reported and/or configured fo UE/(NCR-)MT refers to defining and/or reporting and/or configuring only one third parameter (without distinguishing SCS and frequency range). For example, the third parameter may be applicable to different frequency ranges and/or the first SCS and/or the second SCS.

For example, the third parameter is defined for UE/(NCR-)MT. For example, a value for a UE/(NCR-)MT is defined/provided in a protocol, that is, for a UE/(NCR-)MT, the defined value range includes only one value.

Table 26

| $\mu$ | $\Delta f = 2^{\mu} \cdot 15[\text{kHz}]$ | Third parameter [slot] |
|---|---|---|
| 2 | 60 | 1 or 2 or 3 |

Table 27

| $\mu$ | $\Delta f = 2^{\mu} \cdot 15[\text{kHz}]$ | Third parameter [slot] |
|---|---|---|
| 2 | 60 | 7 or 8 or 14 or 28(or are added with 14 respectively) |

For example, the value range of the third parameter is defined for the UE/(NCR-)MT, and/or the value of the third parameter is reported/indicated (by the NCR/NCR-MT) and/or configured/indicated (by the base station). For example, a value range is defined/provided in a protocol for the UE/(NCR-)MT, which includes multiple values, and one or more values therein need to be reported/indicated (by the NCR/NCR-MT), and/or one value needs to be configured/indicated (by the base station). Wherein, at least for the case where the NCR/NCR-MT report(s)/indicate(s) multiple values, it is needed that the base station further configures/indicates one value.

Table 28

| $\mu$ | $\Delta f = 2^{\mu} \cdot 15$[kHz] | Third parameter [slot] |
|---|---|---|
| 2 | 60 | {1, 2, 3} |

Table 29

| $\mu$ | $\Delta f = 2^{\mu} \cdot 15$[kHz] | Third parameter [slot] |
|---|---|---|
| 2 | 60 | {7, 14, 28} |

It should be noted that there are multiple cases in Tables 12 to 29 where the third parameter includes "or", but the first parameter is one of the cases.

In some embodiments, (all/any) NCR must support the first DCI format (or aperiodic beam indications), or (an NCR) may or may not support such a feature or function. For the latter case, the NCR may report whether it supports. Meanwhile, it is assumed that the third parameter needs the NCR to report and/or the network device to indicate (such as those in (I) to (III) per subcarrier spacing/frequency range/UE/MT). In case of supporting, the NCR (must) reports the above third parameter. Or, the NCR indirectly indicates that it supports the first DCI format by reporting the above third parameter mentioned. Correspondingly, if the NCR does not report the third parameter, the network device deems that it does not support the first DCI format.

The fourth parameter shall be described below.

In some embodiments, the fourth parameter is configured by RRC (second information), and is identical to the second parameter, and/or is used to determine the second parameter, and/or is used to determine one or more slots other than the above first slot. For example, the fourth parameter (k2) may be slotOffsetAperiodic-r18.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the embodiments of this disclosure, in determining the positions of time domain resources corresponding to the access link beams, subcarrier spacings and/or reference slot positions and/or offsets are taken into account. This enables corresponding time domain resources of the repeater in performing forwarding to match corresponding time domain resources of signals received or transmitted between the network device and the UE, thereby improving effects of amplifying/enhancing signals, saving power consumption of the repeater, reducing interference to other devices in the network, and improving throughput of the network.

Embodiments of a second aspect

The embodiments of this disclosure provide an information transmitting method, which shall be described from a network device side, with contents identical to those in the embodiments of the first aspect being not going to be described herein any further.

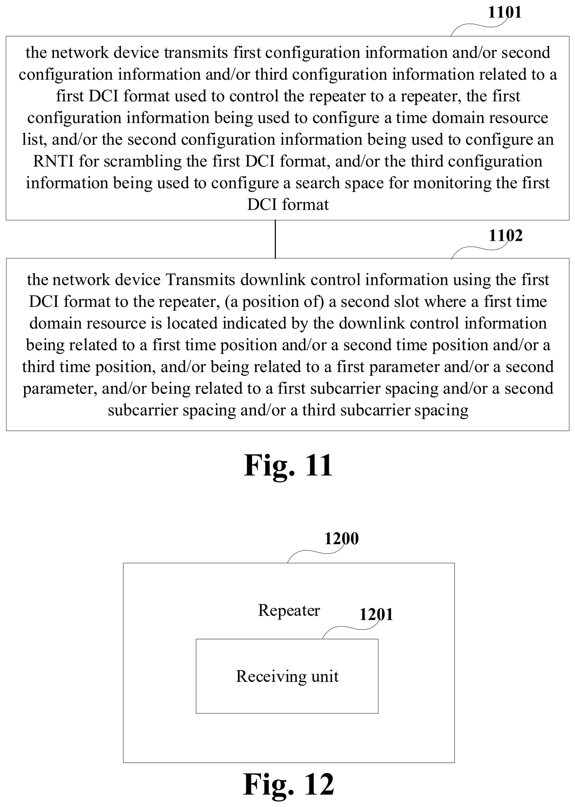

FIG. 11 is a schematic diagram of the information transmitting method of the embodiments of this disclosure. As shown in FIG. 11, the method includes:

1101: the network device transmits first configuration information and/or second configuration information and/or third configuration information related to a first DCI format used to control a repeater to the repeater, the first configuration information being used to configure a time domain resource list, and/or the second configuration information being used to configure an RNTI for scrambling the first DCI format, and/or the third configuration information being used to configure a search space for monitoring the first DCI format; and

1102: the network device transmits downlink control information using the first DCI format to the repeater, (a position of) a second slot where a first time domain resource is located indicated by the downlink control information being related to a first time position and/or a second time position and/or a third time position, and/or being related to a first parameter and/or a second parameter, and/or being related to a first subcarrier spacing and/or a second subcarrier spacing and/or a third subcarrier spacing.

It should be noted that FIG. 11 only schematically illustrates the embodiments of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIG. 11.

The steps or processes related to this disclosure are only described above; however, this disclosure is not limited thereto. The method of the embodiments of this disclosure may also include other steps or processes, and reference may be made to relevant techniques for specific contents of these steps or processes.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

Embodiments of a third aspect

The embodiments of this disclosure provide a repeater. The repeater may be, for example, the NCR as described above, or a network device or terminal equipment having a function of forwarding, or one or some components or assemblies configured in the NCR or the network device or the terminal equipment.

FIG. 12 is a schematic diagram of the repeater of the embodiments of this disclosure. As a principle of the repeater for solving problems is similar to that of the method in the embodiments of the first aspect, reference may be made to the embodiments of the first aspect for implementation of the repeater, with identical contents being not going to be described herein any further.

As shown in FIG. 12, the repeater 1200 includes:

a receiving unit 1201 configured to receive first configuration information and/or second configuration information and/or third configuration information related to a first DCI format used to control the repeater, the first configuration information being used to configure a time domain resource list, and/or the second configuration information being used to configure an RNTI for scrambling the first DCI format, and/or the third configuration information being used to configure a search space for monitoring the first DCI format;

and receive downlink control information using the first DCI format, (a position of) a second slot where a first time domain resource is located indicated by the downlink control information being related to a first time position and/or a second time position and/or a third time position, and/or being related to a first parameter and/or a second parameter, and/or being related to a first subcarrier spacing and/or a second subcarrier spacing and/or a third subcarrier spacing.

Furthermore, for the sake of simplicity, connection relationships between the components or modules or signal profiles thereof are only illustrated in FIG. 12. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

Embodiments of a fourth aspect

The embodiments of this disclosure provide a network device.

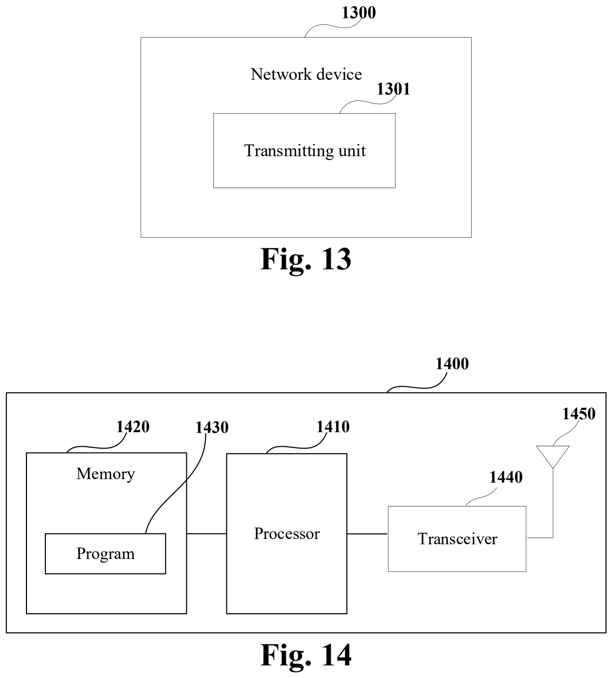

FIG. 13 is a schematic diagram of the network device of the embodiments of this disclosure. As a principle of the network device for solving problems is similar to that of the method in the embodiments of the second aspect, reference may be made to the implementation of the method described in the embodiments of the second aspect for implementation of the network device, with identical or related contents being not going to be described herein any further.

As shown in FIG. 13, the network device 1300 of the embodiments of this disclosure includes:

a transmitting unit 1301 configured to transmit first configuration information and/or second configuration information and/or third configuration information related to a first DCI format used to control the repeater by the network device to the repeater, the first configuration information being used to configure a time domain resource list, and/or the second configuration information being used to configure an RNTI for scrambling the first DCI format, and/or the third configuration information being used to configure a search space for monitoring the first DCI format;

and transmit downlink control information using the first DCI format to the repeater, (a position of) a second slot where a first time domain resource is located indicated by the downlink control information being related to a first time position and/or a second time position and/or a third time position, and/or being related to a first parameter and/or a second parameter, and/or being related to a first subcarrier spacing and/or a second subcarrier spacing and/or a third subcarrier spacing.

It should be noted that the components or modules related to this disclosure are only described above. However, this disclosure is not limited thereto, and the network device 1300 of the embodiments of this disclosure may further include other components or modules, and reference may be made to related techniques for particulars of these components or modules.

Furthermore, for the sake of simplicity, connection relationships between the components or modules or signal profiles thereof are only illustrated in FIG. 13. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

Embodiments of a fifth aspect

The embodiments of this disclosure provide a communication system. FIG. 1 is a schematic diagram of the communication system of the embodiments of this disclosure. As shown in FIG. 1, the communication system includes a network device 101, a repeater 102 and a terminal equipment 103. For the sake of simplicity, description is given in FIG. 1 by taking one network device, one repeater and two terminal equipments only as an example; however, the embodiments of this disclosure is not limited thereto.

In the embodiments of this disclosure, existing traffics or traffics that may be implemented in the future may be performed between the network device 101 and the terminal equipment 103. For example, such traffics may include but not limited to enhanced mobile broadband (eMBB), massive machine type communication (mMTC), ultra-reliable and low-latency communication (URLLC), and vehicle to everything (V2X) communication, etc. The repeater 102 is configured to execute the information receiving method in the embodiments of the first aspect, and the network device 101 is configured to execute the information transmitting method in the embodiments of the second aspect, contents of which being incorporated herein, which shall not be repeated herein any further.

The embodiments of this disclosure further provide an electronic device, which may be, for example, a repeater or a network device.

FIG. 14 is a schematic diagram of a structure of the electronic device of the embodiments of this disclosure. As shown in FIG. 14, the electronic device 1400 may include a processor 1410 (such as a central processing unit (CPU)) and a memory 1420, the memory 1420 being coupled to the processor 1410. Wherein, the memory 1420 may store various data, and furthermore, it may store a program 1430 for information processing, and execute the program 1430 under control of the processor 1410.

For example, the processor 1410 may be configured to execute a program to execute the information transmitting method described in the embodiments of the second aspect.

For another example, the processor 1410 may be configured to execute a program to execute the information receiving method described in the embodiments of the first aspect.

Furthermore, as shown in FIG. 14, the electronic device 1400 may include a transceiver 1440, and an antenna 1450, etc. Wherein, functions of the above components are similar to those in the related art, and shall not be described herein any further. It should be noted that the electronic device 1400 does not necessarily include all the parts shown in FIG. 14, and furthermore, the electronic device 1400 may include parts not shown in FIG. 14, and the related art may be referred to.

An embodiments of this disclosure provide a computer program, which, when executed in a network device, will cause a computer to carry out the information transmitting method described in the embodiments of the second aspect in the network device.

An embodiments of this disclosure provide a storage medium, including a computer readable program, which will cause a computer to carry out the information transmitting method described in the embodiments of the second aspect in the network device.

An embodiments of this disclosure provide a computer program, which, when executed in a repeater, will cause a computer to carry out the information receiving method described in the embodiments of the first aspect in the repeater.

An embodiments of this disclosure provide a storage medium, including a computer readable program, which will cause a computer to carry out the information receiving method described in the embodiments of the first aspect in the repeater.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile termination, and may also be stored in a memory card of a pluggable mobile termination. For example, if equipment (such as a mobile termination) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

As to implementations containing the above embodiments, following supplements are further disclosed.

1. An information receiving method, applicable to a repeater, characterized in that the method comprises:

receiving, by the repeater, first configuration information and/or second configuration information and/or third configuration information related to a first DCI format used to control the repeater, the first configuration information being used to configure a time domain resource list, and/or the second configuration information being used to configure an RNTI for scrambling the first DCI format, and/or the third configuration information being used to configure a search space for monitoring the first DCI format; and

receiving, by the repeater, downlink control information using the first DCI format, (a position of) a second slot where a first time domain resource is located indicated by the downlink control information being related to a first time position and/or a second time position and/or a third time position, and/or being related to a first parameter and/or a second parameter, and/or being related to a first subcarrier spacing and/or a second subcarrier spacing and/or a third subcarrier spacing.

2. The method according to supplement 1, wherein the method further includes:
forwarding by the repeater on the first time domain resource.

3. The method according to supplement 1 or 2, wherein the second slot is a slot where the first time domain resource is located and/or a first one of slots where the first time domain resource is located and/or a slot where a first one of symbols of the first time domain resource is located.

4. The method according to any of supplements 1-3, wherein the first time position includes:

a first slot or a first one of slots after a first slot; and/or,
a fifth slot or a first one of slots after a fifth slot; and/or,
a symbol position of the downlink control information or a symbol position of a PDCCH carrying the downlink control information.

5. The method according to any of supplements 1-4, wherein the second time position includes:

a third slot or a first one of slots after a third slot; and/or,
a fourth slot or a first one of slots after a fourth slot; and/or,
a sixth slot or a first one of slots after a sixth slot.

6. The method according to any of supplements 1-5, wherein the third time position includes: a seventh slot or a first one of slots after a seventh slot.

7. The method according to any of supplements 4-6, wherein,

the first slot is a slot where the downlink control information or the PDCCH carrying the downlink control information is located.

7a. The method according to supplement 7, wherein the first slot is based on the second subcarrier spacing.

7b. The method according to any of supplements 4-7a, wherein the first slot is one or a first one or a last one of slots where the downlink control information or the PDCCH carrying the downlink control information is located, or a slot where a symbol is located, the downlink control information or the PDCCH carrying the downlink control information being located at the symbol.

8. The method according to any of supplements 4-7, wherein,

the fifth slot is a slot overlapping with the first slot or a slot after an overlapped slot with the first slot, or a slot overlapping with the slot or symbol where the downlink control information or the PDCCH carrying the downlink control information is located, or a slot having a fourth offset from a slot overlapping with the first slot or a slot overlapping with the slot or symbol where the downlink control information or the PDCCH carrying the downlink control information is located, or a slot overlapping with the slot or symbol where the downlink control information or the PDCCH carrying the downlink control information is located.

8a. The method according to supplement 8, wherein the fifth slot is based on the first subcarrier spacing.

9. The method according to any of supplements 4-8, wherein,

the third slot is after the first slot or is equal to the first slot, and/or is determined by the first parameter.

9a. The method according to supplement 9, wherein the third slot is based on the second subcarrier spacing.

10. The method according to any of supplements 4-9, wherein,

the fourth slot is a slot overlapping or not overlapping with the third slot, or there exists a third offset between the fourth slot and the third slot.

10a. The method according to supplement 10, wherein the fourth slot is based on the first subcarrier spacing.

11. The method according to any of supplements 4-10, wherein,

the sixth slot is after the fifth slot or is equal to the fifth slot, and/or is determined by the first parameter.

11a. The method according to supplement 11, wherein the sixth slot is based on the first subcarrier spacing.

12. The method according to any of supplements 4 -11, wherein,

the second slot is a slot overlapping with the seventh slot, or the second slot is a slot not overlapping with the seventh slot, or there exists a fifth offset between the second slot and a slot overlapping with the seventh slot.

12a. The method according to supplement 12, wherein the seventh slot is based on the second subcarrier spacing.

13. The method according to any of supplements 5- 12, wherein the second time position is related to the first parameter.

13a. The method according to supplement 13, wherein the first time position is a reference time position of the second time position.

14. The method according to any of supplements 6-13, wherein the third time position is related to the second parameter.

14a. The method according to supplement 14, wherein the first time position and/or the second time position is/are a reference time position(s) of the third time position.

15. The method according to any of supplements 1-13, wherein the first parameter denotes a first offset, and the first parameter is equal to the third parameter, and/or the first parameter is determined according to the third parameter and/or the first subcarrier spacing and/or the second subcarrier spacing and/or the third subcarrier spacing.

16. The method according to any of supplements 1-14, wherein the second parameter denotes a second offset, and the second parameter is equal to the fourth parameter, and/or the second parameter is determined according to the fourth parameter and/or the first subcarrier spacing and/or the second subcarrier spacing and/or the third subcarrier spacing.

17. The method according to supplement 15 or 16, wherein the first parameter and/or the second parameter is/are in a unit of a slot or a symbol or an absolute time.

18. The method according to supplement 15 or 16, wherein the third parameter denotes a shortest time needed by an NCR in receiving the DCI and/or in applying an indicated beam.

19. The method according to supplement 18, wherein the third parameter is correlated and/or uncorrelated with the third subcarrier spacing.

20. The method according to supplement 18 or 19, wherein the third parameter is defined and/or reported and/or configured for different subcarrier spacings, and/or the third parameter is defined and/or reported and/or configured for different frequency ranges, and/or the third parameter is defined and/or reported and/or configured respectively for a UE/the NCR.

21. The method according to supplement 16, wherein the fourth parameter is configured by RRC signaling.

22. The method according to any of supplements 1-21, wherein the first subcarrier spacing denotes a subcarrier spacing of first information configuration and/or a reference subcarrier spacing of the time domain resource.

23. The method according to any of supplements 1-22, wherein the second subcarrier spacing denotes a subcarrier spacing of the downlink control information, and/or a subcarrier spacing of the PDCCH carrying the downlink control information, and/or a subcarrier spacing of an active downlink BWP, and/or a subcarrier spacing of a BWP where the downlink control information is located, and/or a subcarrier spacing of a BWP where the PDCCH carrying the downlink control information is located, and/or a subcarrier spacing of a BWP used for monitoring the downlink control information.

24. The method according to supplement 23, wherein the active DL BWP refers to an active downlink BWP when the downlink control information is received.

25. The method according to any of supplements 1-24, wherein the third subcarrier spacing denotes a subcarrier spacing for which/based on which the first parameter and/or the third parameter is/are defined and/or reported and/or configured.

26. The method according to supplement 25, wherein a value range of the third subcarrier spacing is identical to or different from a value range of the first subcarrier spacing or the second subcarrier spacing.

27. The method according to any of supplements 1-26, wherein two or three of the first subcarrier spacing, the second subcarrier spacing and the third subcarrier spacing are identical or different.

28. The method according to any of supplements 1-27, wherein two or three of the first subcarrier spacing, the second subcarrier spacing and the third subcarrier spacing are subcarrier spacings for the same frequency range, or subcarrier spacings for different frequency ranges.

29. The method according to any of supplements 1-28, wherein the third slot (and/or the fourth slot) and/or the sixth slot (and/or the seventh slot) is/are a slot(s) with a first offset relative to the first time position, or a slot(s) after a first offset of the first time position.

30. The method according to supplement 29, wherein the first offset is related to the first subcarrier spacing and/or the second subcarrier spacing and/or the third subcarrier spacing.

31. The method according to any of supplements 1-30, wherein the second slot and/or the seventh slot is/are a slot(s) with a second offset relative to the second time position, or a slot(s) after a second offset of the second time position.

32. The method according to supplement 31, wherein the second offset is related to the first subcarrier spacing and/or the second subcarrier spacing and/or the third subcarrier spacing.

33. The method according to any of supplements 1-32, wherein the second slot and/or the seventh slot is/are a slot(s) with a sixth offset relative to the first time position, or a slot(s) after a sixth offset of the first time position.

34. The method according to supplement 33, wherein the sixth offset is related to the first subcarrier spacing and/or the second subcarrier spacing and/or the third subcarrier spacing.

35. The method according to supplement 34, wherein the sixth offset is related to the first offset and/or the second offset.

36. An information receiving method, applicable to a network device, characterized in that the method includes:

transmitting first configuration information and/or second configuration information and/or third configuration information related to a first DCI format used to control the repeater by the network device to the repeater, the first configuration information being used to configure a time domain resource list, and/or the second configuration information being used to configure an RNTI for scrambling the first DCI format, and/or the third configuration information being used to configure a search space for monitoring the first DCI format; and
transmitting downlink control information using the first DCI format by the network device to the repeater, (a position of) a second slot where a first time domain resource is located indicated by the downlink control information being related to a first time position and/or a second time position and/or a third time position, and/or being related to a first parameter and/or a second parameter, and/or being related to a first subcarrier spacing and/or a second subcarrier spacing and/or a third subcarrier spacing.

37. A repeater, including a memory and a processor, the memory storing a computer program, and the processor being configured to execute the computer program to carry out the method as described in any one of supplements 1-35.

38. A network device, including a memory and a processor, the memory storing a computer program, and the processor being configured to execute the computer program to carry out the method as described in supplement 36.

**Claims**

1. A repeater, **characterized in that** the repeater comprises:

a receiving unit configured to receive first configuration information and/or second configuration information and/or third configuration information related to a first DCI format used to control the repeater, the first configuration information being used to configure a time domain resource list, and/or the second configuration information being used to configure an RNTI for scrambling the first DCI format, and/or the third configuration information being used to configure a search space for monitoring the first DCI format; and

the receiving unit is further configured to receive downlink control information using the first DCI format, (a position of) a second slot where a first time domain resource is located indicated by the downlink control information being related to a first time position and/or a second time position and/or a third time position, and/or being related to a first parameter and/or a second parameter, and/or being related to a first subcarrier spacing and/or a second subcarrier spacing and/or a third subcarrier spacing.

2. The repeater according to claim 1, wherein the second slot is a slot where the first time domain resource is located and/or a first one of slots where the first time domain resource is located and/or a slot where a first one of symbols of the first time domain resource is located.

3. The repeater according to claim 1, wherein the first time position includes:

a first slot or a first one of slots after a first slot; and/or,
a fifth slot or a first one of slots after a fifth slot; and/or,
a symbol position of the downlink control information or a symbol position of a PDCCH carrying the downlink control information.

4. The repeater according to claim 1, wherein the second time position includes:

a third slot or a first one of slots after a third slot; and/or,
a fourth slot or a first one of slots after a fourth slot; and/or,
a sixth slot or a first one of slots after a sixth slot.

5. The repeater according to claim 1, wherein the third time position includes: a seventh slot or a first one of slots after a seventh slot.

6. The repeater according to claim 3, wherein,
the first slot is a slot where the downlink control information or the PDCCH carrying the downlink control information is located.

7. The repeater according to claim 3, wherein,
the fifth slot is a slot overlapping with the first slot or a slot after an overlapped slot with the first slot, or a slot overlapping with the slot or symbol where the downlink control information or the PDCCH carrying the downlink control information is located, or a slot having a fourth offset from a slot overlapping with the first slot or a slot overlapping with the slot or symbol where the downlink control information or the PDCCH carrying the downlink control information is located, or a slot overlapping with the slot or symbol where the downlink control information or the PDCCH carrying the downlink control information is located.

8. The repeater according to claims 3, wherein the first slot is based on the second subcarrier spacing, and/or the fifth slot is based on the first subcarrier spacing.

9. The repeater according to claim 4, wherein,
the third slot is after the first slot or is equal to the first slot, and/or is determined by the first parameter.

10. The repeater according to claim 4, wherein,
the fourth slot is a slot overlapping or not overlapping with the third slot, or there exists a third offset between the fourth slot and the third slot.

11. The repeater according to claim 4, wherein,
the sixth slot is after the fifth slot or is equal to the fifth slot, and/or is determined by the first parameter.

12. The repeater according to claim 4, wherein the third slot is based on the second subcarrier spacing, and/or the fourth slot is based on the first subcarrier spacing, and/or the sixth slot is based on the first subcarrier spacing.

13. The repeater according to claim 5, wherein,
the second slot is a slot overlapping with the seventh slot, or the second slot is a slot not overlapping with the seventh slot, or there exists a fifth offset between the second slot and a slot overlapping with the seventh slot.

14. The repeater according to claims 13, wherein the seventh slot is based on the second subcarrier spacing.

15. The repeater according to claim 4 or 5, wherein the second time position is related to the first parameter, and/or the third time position is related to the second parameter.

16. The repeater according to claim 1, wherein the first parameter denotes a first offset, and the first parameter is equal to the third parameter, and/or the first parameter is determined according to the third parameter and/or the first subcarrier spacing and/or the second subcarrier spacing and/or the third subcarrier spacing.

17. The repeater according to claim 1, wherein the second parameter denotes a second offset, and the second parameter is equal to the fourth parameter, and/or the second parameter is determined according to the fourth parameter and/or the first subcarrier spacing and/or the second subcarrier spacing and/or the third subcarrier spacing.

18. The repeater according to claim 1, wherein the first subcarrier spacing denotes a subcarrier spacing of first information configuration and/or a reference subcarrier spacing of the time domain resource; and/or

the second subcarrier spacing denotes a subcarrier spacing of the downlink control information, and/or a subcarrier spacing of the PDCCH carrying the downlink control information, and/or a subcarrier spacing of an active downlink BWP, and/or a subcarrier spacing of a BWP where the downlink control information is located, and/or a subcarrier spacing of a BWP where the PDCCH carrying the downlink control information is located, and/or a subcarrier spacing of a BWP used for monitoring the downlink control information; and/or
the third subcarrier spacing denotes a subcarrier spacing for which/based on which the first parameter and/or the third parameter is/are defined and/or reported and/or configured.

19. A network device, **characterized in that** the network device comprises:

a transmitting unit configured to transmit first configuration information and/or second configuration information and/or third configuration information related to a first DCI format used to control the repeater by the network device to the repeater, the first configuration information being used to configure a time domain resource list, and/or the second configuration information being used to configure an RNTI for scrambling the first DCI format, and/or the third configuration information being used to configure a search space for monitoring the first DCI format; and
the transmitting unit further configured to transmit downlink control information using the first DCI format by the network device to the repeater, (a position of) a second slot where a first time domain resource is located indicated by the downlink control information being related to a first time position and/or a second time position and/or a third time position, and/or being related to a first parameter and/or a second parameter, and/or being related to a first subcarrier spacing and/or a second subcarrier spacing and/or a third subcarrier spacing.

20. A communication system, comprises a repeater as claimed in claim 1 and/or a network device as claimed in claim 19.

**Fig. 1**

**201**

the repeater (NCR or NCR-MT) receives, first configuration information and/or second configuration information and/or third configuration information related to a first DCI format used to control the repeater, the first configuration information being used to configure a time domain resource list, and/or the second configuration information being used to configure an RNTI for scrambling the first DCI format, and/or the third configuration information being used to configure a search space for monitoring the first DCI format

**202**

the repeater (NCR or NCR-MT) Receives downlink control information

**Fig. 2**

First slot

| SCS=60 kHz (second SCS) | DCI | 0 | | 1 | | 2 | | 3 | |
| SCS=120 kHz (first SCS) | 0 | 1 | 2 | 3 | 4 | 5 | 6 | 7 | |

a Time domain resource indicated by the DCI

Second slot

**Fig. 3A**

First slot

Second slot

a Time domain
resource indicated by
the DCI

SCS=120 kHz | DCI | 0 | 1 | 2 | | 3 | |

## Fig. 3B

First slot

SCS=120 kHz (second SCS) | DCI | 0 | 1 | 2 | 3 | 4 | 5 | 6 | 7 |

SCS=60 kHz (first SCS) | 0 | 1 | 2 | | 3 | |

a Time domain resource
indicated by the DCI

Second slot

## Fig. 3C

First slot

SCS=60 kHz (second SCS) | DCI | 0 | 1 | 2 | 3 |

SCS=120 kHz (first SCS) | 0 | 1 | 2 | 3 | 4 | 5 | 6 | | 7 |

Fifth slot

Sixth slot

Second slot

a Time domain resource
indicated by the DCI

## Fig. 4A

First slot and/or fifth slot

Sixth slot

Second slot

a Time domain resource
indicated by the DCI

SCS=120 kHz | DCI | 0 | 1 | 2 | | 3 | |

## Fig. 4B

**Fig. 4C**

**Fig. 5A**

**Fig. 5B**

**Fig. 5C**

**Fig. 6A**

**Fig. 6B**

**Fig. 6C**

**Fig. 7A**

**Fig. 7B**

**Fig. 8A**

**Fig. 8B**

SCS=60 kHz: DCI | 0 | 1 | 2 | 3
SCS=120 kHz: 0 | 1 | 2 | 3 | 4 | 5 | 6 | 7

k1=28 (first offset)

Sixth slot

Second slot

a Time domain resource indicated by the DCI

**Fig. 8C**

SCS=60 kHz: DCI | 0 | 1 | 2 | 3
SCS=120 kHz: 0 | 1 | 2 | 3 | 4 | 5 | 6 | 7

k1=56 (first offset)

Sixth slot

Second slot

a Time domain resource indicated by the DCI

**Fig. 8D**

SCS=60 kHz: DCI | 0 | 1 | 2 | 3
SCS=120 kHz: 0 | 1 | 2 | 3 | 4 | 5 | 6 | 7

k1=42 (first offset)

Fifth slot

Slot n2+k1(sixth slot)

Second slot

a Time domain resource indicated by the DCI

**Fig. 9A**

First slot

Third slot

k1=0.25 (first offset)

SCS=60 kHz: DCI | 0 | 1 | 2 | 3
SCS=120 kHz: 0 | 1 | 2 | 3 | 4 | 5 | 6 | 7

Second slot

a Time domain resource indicated by the DCI

First slot

Third slot

k1=0.25 (first offset）

| SCS=60 kHz | DCI | 0 | | 1 | | 2 | | 3 | |
|---|---|---|---|---|---|---|---|---|---|

| SCS=120 kHz | 0 | 1 | 2 | 3 | 4 | 5 | 6 | 7 | |
|---|---|---|---|---|---|---|---|---|---|

a Time domain resource indicated by the DCI

Second slot

# Fig. 9B

First slot

Third slot

k1=0.5 (first offset）

| SCS=60 kHz | DCI | 0 | | 1 | | 2 | | 3 | |
|---|---|---|---|---|---|---|---|---|---|

| SCS=120 kHz | 0 | 1 | 2 | 3 | 4 | 5 | 6 | 7 | |
|---|---|---|---|---|---|---|---|---|---|

a Time domain resource indicated by the DCI

Second slot

# Fig. 9C

k1=0.5 (first offset）

| SCS=60 kHz | DCI | 0 | | 1 | | 2 | | 3 | |
|---|---|---|---|---|---|---|---|---|---|

| SCS=120 kHz | 0 | 1 | 2 | 3 | 4 | 5 | 6 | 7 | |
|---|---|---|---|---|---|---|---|---|---|

a Time domain resource indicated by the DCI

Sixth slot

Second slot

# Fig. 9D

k1=0.375 (first offset）

| SCS=60 kHz | DCI | 0 | | 1 | | 2 | | 3 | |
|---|---|---|---|---|---|---|---|---|---|

| SCS=120 kHz | 0 | 1 | 2 | 3 | 4 | 5 | 6 | 7 | |
|---|---|---|---|---|---|---|---|---|---|

a Time domain resource indicated by the DCI

Sixth slot

Second slot

# Fig. 9E

**Fig. 9F**

**Fig. 10A**

**Fig. 10B**

**Fig. 10C**

**1101**

the network device transmits first configuration information and/or second configuration information and/or third configuration information related to a first DCI format used to control the repeater to a repeater, the first configuration information being used to configure a time domain resource list, and/or the second configuration information being used to configure an RNTI for scrambling the first DCI format, and/or the third configuration information being used to configure a search space for monitoring the first DCI format

**1102**

the network device Transmits downlink control information using the first DCI format to the repeater, (a position of) a second slot where a first time domain resource is located indicated by the downlink control information being related to a first time position and/or a second time position and/or a third time position, and/or being related to a first parameter and/or a second parameter, and/or being related to a first subcarrier spacing and/or a second subcarrier spacing and/or a third subcarrier spacing

## Fig. 11

**1200**

Repeater **1201**

Receiving unit

## Fig. 12

1300

Network device

1301

Transmitting unit

**Fig. 13**

1400

1450

1420        1430        1410        1440

Memory

Program

Processor

Transceiver

**Fig. 14**

## INTERNATIONAL SEARCH REPORT

| | International application No. |
|---|---|
| | **PCT/CN2023/087155** |

**A. CLASSIFICATION OF SUBJECT MATTER**

H04W72/02(2009.01)i

According to International Patent Classification (IPC) or to both national classification and IPC

**B. FIELDS SEARCHED**

Minimum documentation searched (classification system followed by classification symbols)

IPC: H04W H04L H04Q

Documentation searched other than minimum documentation to the extent that such documents are included in the fields searched

Electronic data base consulted during the international search (name of data base and, where practicable, search terms used)

CNTXT, ENTXT, DWPI, 3GPP: 接收, DCI, 格式, 配置, 时域, 资源, 列表, 表, 加扰, RNTI, 搜索空间, 下行控制信息, 时隙, 位置, 子载波间隔, receive, format, configuration, time domain, resource, list, table, scrambling, slot, location, search space, SCS, subcarrier spacing

**C. DOCUMENTS CONSIDERED TO BE RELEVANT**

| Category* | Citation of document, with indication, where appropriate, of the relevant passages | Relevant to claim No. |
|---|---|---|
| X | WO 2022155411 A1 (OFINNO, LLC) 21 July 2022 (2022-07-21)<br>claims 1-107 | 1-20 |
| A | WO 2022067726 A1 (HUAWEI TECHNOLOGIES CO., LTD.) 07 April 2022 (2022-04-07)<br>entire document | 1-20 |
| A | CN 112314025 A (SHARP KABUSHIKI KAISHA et al.) 02 February 2021 (2021-02-02)<br>entire document | 1-20 |
| A | CN 113170440 A (HUAWEI TECHNOLOGIES CO., LTD.) 23 July 2021 (2021-07-23)<br>entire document | 1-20 |
| A | INTEL CORPORATION. "Discussion on requirements for spatial relation info switch for uplink"<br>*3GPP TSG-RAN WG4 Meeting #94-e. R4-2000373*, 06 March 2020 (2020-03-06),<br>entire document | 1-20 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 October 2023** | **25 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/087155**

| Patent document cited in search report | | | Publication date (day/month/year) | Patent family member(s) | | | Publication date (day/month/year) |
|---|---|---|---|---|---|---|---|
| WO | 2022155411 | A1 | 21 July 2022 | EP | 4248603 | A1 | 27 September 2023 |
| WO | 2022067726 | A1 | 07 April 2022 | WO | 2022068177 | A1 | 07 April 2022 |
| CN | 112314025 | A | 02 February 2021 | EP | 3811699 | A1 | 28 April 2021 |
| | | | | WO | 2019246451 | A1 | 26 December 2019 |
| | | | | MX | 2020013716 | A | 02 March 2021 |
| | | | | US | 2019394759 | A1 | 26 December 2019 |
| CN | 113170440 | A | 23 July 2021 | WO | 2021088062 | A1 | 14 May 2021 |
| | | | | EP | 4048005 | A1 | 24 August 2022 |
| | | | | US | 2022272745 | A1 | 25 August 2022 |
| | | | | IN | 202237028609 | A | 20 January 2023 |

Form PCT/ISA/210 (patent family annex) (July 2022)